(19) **Europäisches Patentamt / European Patent Office / Office européen des brevets**

(11) **EP 2 350 735 B1**

(12) **FASCICULE DE BREVET EUROPEEN**

(45) Date de publication et mention
de la délivrance du brevet:
**12.08.2015 Bulletin 2015/33**

(21) Numéro de dépôt: **09795502.5**

(22) Date de dépôt: **23.11.2009**

(51) Int Cl.:
*G02C 7/02* (2006.01)      *G02C 7/08* (2006.01)
*G02B 27/01* (2006.01)

(86) Numéro de dépôt international:
**PCT/FR2009/052267**

(87) Numéro de publication internationale:
**WO 2010/061115 (03.06.2010 Gazette 2010/22)**

(54) **VERRE DE LUNETTES PROCURANT UNE VISION OPHTALMIQUE ET UNE VISION SUPPLEMENTAIRE.**

BRILLENGLAS MIT BRILLENSICHT UND ZUSÄTZLICHER SICHT

SPECTACLE LENS PROVIDING OPHTHALMIC VISION AND AN ADDITIONAL VISION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.11.2008 FR 0857979**

(43) Date de publication de la demande:
**03.08.2011 Bulletin 2011/31**

(73) Titulaire: **Essilor International
(Compagnie Générale d'Optique)
94220 Charenton-le-Pont (FR)**

(72) Inventeurs:
• **GUILLOT, Matthieu
F-94220 Charenton-le-Pont (FR)**
• **ROUSSEAU, Benjamin
94220 Charenton-le-Pont (FR)**
• **VIDEMANN, Antoine
94220 Charenton-le-Pont (FR)**

(74) Mandataire: **Cabinet Plasseraud
52, rue de la Victoire
75440 Paris Cedex 09 (FR)**

(56) Documents cités:
**WO-A-99/23526          WO-A-2005/024969
WO-A-2006/016086     WO-A-2008/003903
WO-A-2008/090102     WO-A1-2008/090000
FR-A1- 2 873 212          US-B1- 6 356 392**

**Description**

La présente invention concerne un procédé de réalisation d'un verre de lunettes qui procure au moins deux visions, parmi lesquelles la vision ophtalmique et une vision supplémentaire, à un porteur de ce verre.

Elle concerne aussi un tel verre de lunettes.

Dans le cadre de la présente description, on entend par vision ophtalmique la perception visuelle de l'environnement d'un sujet, tel que cet environnement lui apparaît devant lui en utilisant, si nécessaire, des verres correcteurs ou solaires. Toutefois, de tels verres ne modifient pas l'information qui est contenue dans les images qui sont ainsi perçues.

Par opposition à la vision ophtalmique, une vision supplémentaire peut apporter au sujet des informations qui ne proviennent pas directement de son environnement. Il peut s'agir de données qui sont présentées au sujet. Par exemple, des données de navigation qui sont projetées en surimpression sur la visière d'un casque de pilote d'avion constituent une vision supplémentaire, de type vision informative. Une vision supplémentaire d'un autre type peut fournir des images modifiées de certaines parties de l'environnement du sujet. Ainsi, d'autres exemples de vision supplémentaire sont la fourniture d'une image infrarouge qui est convertie en lumière visible, ou d'une image d'une partie de l'environnement du sujet qui est grossie.

Un verre de lunettes auquel s'applique l'invention est conçu pour présenter de telles images supplémentaires dans le champ de vision du porteur, ou dans une partie de ce champ, tout en conservant la vision ophtalmique. Autrement dit, les deux visions ophtalmique et supplémentaire sont disponibles pour le porteur. Elles peuvent être disponibles simultanément ou alternativement. Dans le cas d'une vision supplémentaire informative, l'image supplémentaire correspond à la présentation visuelle de données d'information. Ces données peuvent apparaître en superposition par rapport à l'image ophtalmique, notamment avec une intensité lumineuse qui est supérieure ou avec une couleur qui est distincte. L'image ophtalmique peut rester visible ou non pendant que les données de la vision supplémentaire informative sont présentées au porteur.

Il est connu de réaliser un tel verre de lunettes qui comprend :

- une face antérieure et une face postérieure, la face postérieure étant tournée vers l'oeil du porteur pour la position d'utilisation du verre ;

- un milieu réfringent, qui est situé entre ces faces antérieure et postérieure ; et

- un insert, qui est situé au sein du milieu réfringent, et qui est adapté pour délivrer entre les faces antérieure et postérieure du verre, par une fenêtre de sortie de l'insert en direction de l'oeil du porteur, une lumière supplémentaire formant l'image supplémentaire visible par le porteur dans la position d'utilisation du verre.

La vision ophtalmique correspond alors à l'image qui est formée par de la lumière ayant traversé successivement la face antérieure, une partie antérieure du milieu réfringent située sur un côté antérieur de l'insert, l'insert ou une partie intermédiaire du milieu réfringent située à l'extérieur d'un bord périphérique de l'insert, une partie postérieure du milieu réfringent située sur un côté postérieur de l'insert, et la face postérieure du verre de lunettes. L'alternative entre l'insert et la partie intermédiaire du milieu réfringent, pour le passage de la lumière de la vision ophtalmique, intervient lorsque l'insert n'occupe pas toute la surface du verre de lunettes qui est disponible pour la vision ophtalmique.

La vision supplémentaire correspond à l'image supplémentaire qui est formée par la lumière supplémentaire, cette lumière supplémentaire traversant l'insert, la partie postérieure du milieu réfringent et la face postérieure du verre de lunettes.

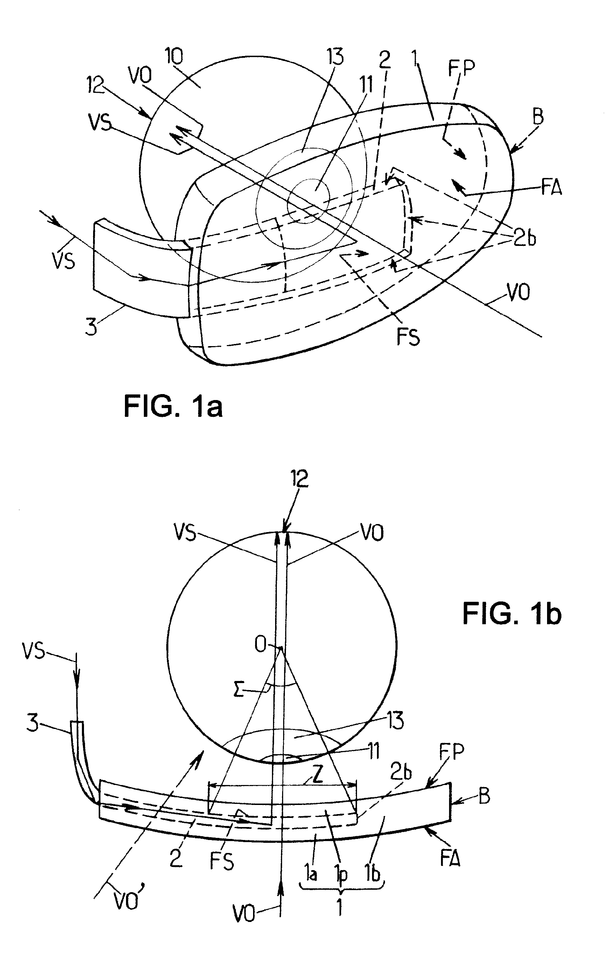

Les figures 1a et 1b illustrent le principe d'un tel verre de lunettes qui procure la vision ophtalmique et une vision supplémentaire. Il comprend un verre de base 1 au sein duquel est disposé l'insert 2. Le verre de base 1 est constitué d'un matériau transparent et réfringent, qui peut être tout matériau organique ou minéral utilisé dans le domaine ophtalmique. Le verre de base 1 possède une face antérieure convexe FA et une face postérieure concave FP. Les faces FA et FP ont des courbures respectives qui déterminent ensemble, avec la valeur d'un indice de réfraction lumineuse pour le milieu réfringent du verre de base 1, une puissance optique du verre de lunettes en dehors de l'insert 2, pour la vision ophtalmique. Cette puissance optique peut varier entre des directions de regard du porteur à travers le verre qui sont différentes.

L'insert 2 peut être un guide lumineux relativement mince, qui est disposé entre les faces FA et FP du verre de base 1. Il peut avoir des caractéristiques de réflexion et/ou réfringence lumineuse qui sont différentes de celles du verre de base 1, et qui sont appropriées pour amener de la lumière supplémentaire VS à partir d'une source 3 qui n'est pas représentée en détail. La lumière VS est ainsi amenée jusqu'à une fenêtre de sortie d'insert FS qui est tournée vers l'oeil du porteur. La structure de l'insert 2 n'est pas l'objet de la présente description, et on pourra se reporter à d'autres documents disponibles à ce sujet. D'une façon générale, le verre de base 1 peut présenter une partie antérieure 1a qui

**EP 2 350 735 B1**

est comprise entre l'insert 2 et la face antérieure FA, ainsi qu'une partie postérieure 1 p qui est comprise entre l'insert 2 et la face postérieure FP. L'insert 2 peut aussi être limité transversalement à l'intérieur d'une zone du verre de base 1, selon certaines directions approximativement parallèles aux faces FA et FP. Dans une telle configuration, la partie antérieure 1a et la partie postérieure 1 p du verre de base 1 se prolongent au-delà d'un bord périphérique 2b de l'insert 2. Le verre de base 1 possède alors une partie intermédiaire 1 b qui s'étend au-delà du bord 2b de l'insert 2, et qui relie continûment les portions 1a et 1b jusqu'à un bord périphérique B du verre de base 1. Le bord B du verre de base 1 peut être, par exemple, circulaire avec un diamètre de 60 mm (millimètre).

Comme indiqué sur la figure 1b, l'ouverture angulaire de la vision supplémentaire, notée $\Sigma$, est limitée par la fenêtre de sortie FS de l'insert 2. Elle a pour pôle un centre O de rotation de l'oeil 10 du porteur derrière le verre. Typiquement, l'ouverture $\Sigma$ peut être de +/-15° (degré) de part et d'autre d'un axe optique de la vision supplémentaire, qui passe par le centre de la fenêtre FS. Les lignes génératrices de la limite de l'ouverture $\Sigma$ coupent la face postérieure FP du verre en définissant une zone Z à l'intérieur de cette face, dans laquelle les deux visions ophtalmique et supplémentaire sont superposées. Dans la configuration des figures 1a et 1b, les axes optiques respectifs de la vision ophtalmique et de la vision supplémentaire sont confondus, mais ils peuvent être distincts.

Les figures 1a et 1b représentent le verre de lunettes en position d'utilisation par le porteur. L'oeil du porteur, référencé 10, est donc situé en arrière du verre, du côté de la face postérieure FP de sorte qu'il reçoit d'une part de la lumière VO en provenance de l'environnement qui est situé devant le verre, et d'autre part la lumière VS qui est amenée par l'insert 2. Les faisceaux lumineux des deux lumières VO et VS correspondent respectivement à la vision ophtalmique et à la vision supplémentaire. Ils forment respectivement, après avoir traversé la pupille 11, une image ophtalmique et une image supplémentaire sur la rétine 12 du porteur. La référence 13 désigne l'iris du porteur qui entoure sa pupille 11. La direction de regard du porteur correspond à l'axe optique de l'oeil 10. Elle coupe les faces FA et FP du verre de lunettes en des points respectifs qui varient lorsque l'oeil 10 tourne dans l'orbite du porteur.

Etant donné que la lumière VO traverse les deux faces FA et FP du verre, celles-ci contribuent ensemble à des caractéristiques optiques du verre qui sont relatives à la vision ophtalmique. A la différence, la lumière VS ne traverse pas la face FA, de sorte que cette face ne contribue pas à des caractéristiques optiques du verre qui sont relatives à la vision supplémentaire. A cause de cette différence entre les lumières VO et VS, celles-ci ne présentent pas des caractéristiques de convergence qui sont identiques après leur traversée de la face postérieure FP du verre. Pour cette raison, les images ophtalmique et supplémentaire qui sont formées sur la rétine ne sont pas nettes simultanément.

Par caractéristiques optiques du verre qui sont relatives à l'une ou l'autre des visions ophtalmique et supplémentaire, on entend notamment une valeur de puissance optique, des valeurs d'astigmatisme, des valeurs de distorsion optique, etc., du verre pour chaque direction du regard du porteur.

L'écart de focalisation entre l'image supplémentaire et l'image ophtalmique sur la rétine 12 peut être compensé par une accommodation de l'oeil 10 du porteur. Le document WO 2008/003903 introduit une limite d'effort accommodatif pour le porteur, lorsqu'il passe de la vision ophtalmique à la vision supplémentaire. Cette limite de l'effort accommodatif dépend, en particulier, de l'âge du porteur. Mais, les deux images ophtalmique et supplémentaire conservent néanmoins des aberrations optiques, notamment lorsque la direction du regard varie à travers le verre de lunettes et/ou à travers la fenêtre de sortie FS de l'insert 2. Dans le cadre de la présente invention, on comprend par aberrations optiques des variations de puissance optique ou d'astigmatisme par rapport à des valeurs prescrites, ou toute autre aberration d'ordre supérieur qui peut être caractérisée, notamment, par les polynômes de Zernike.

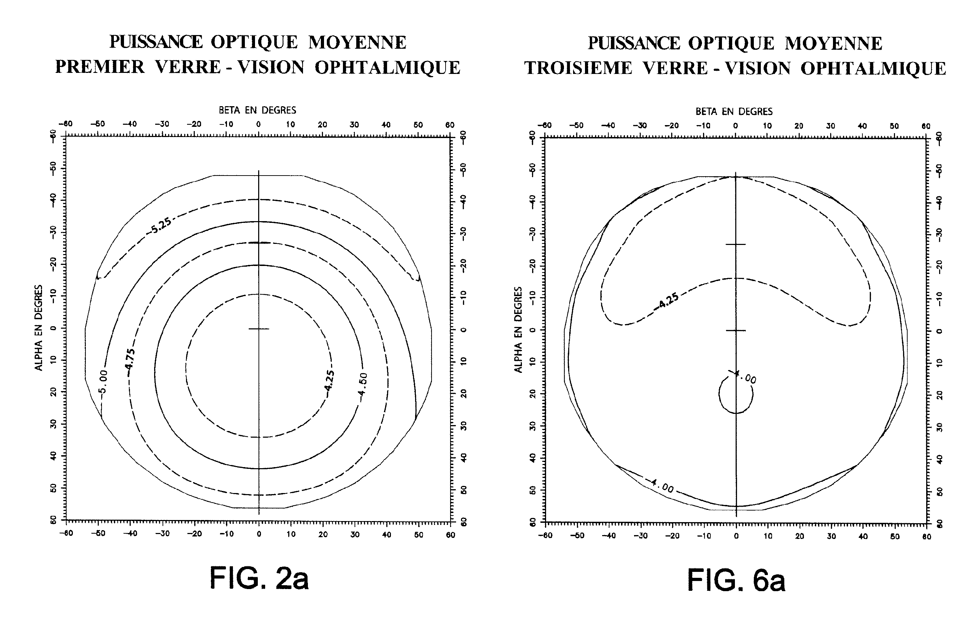

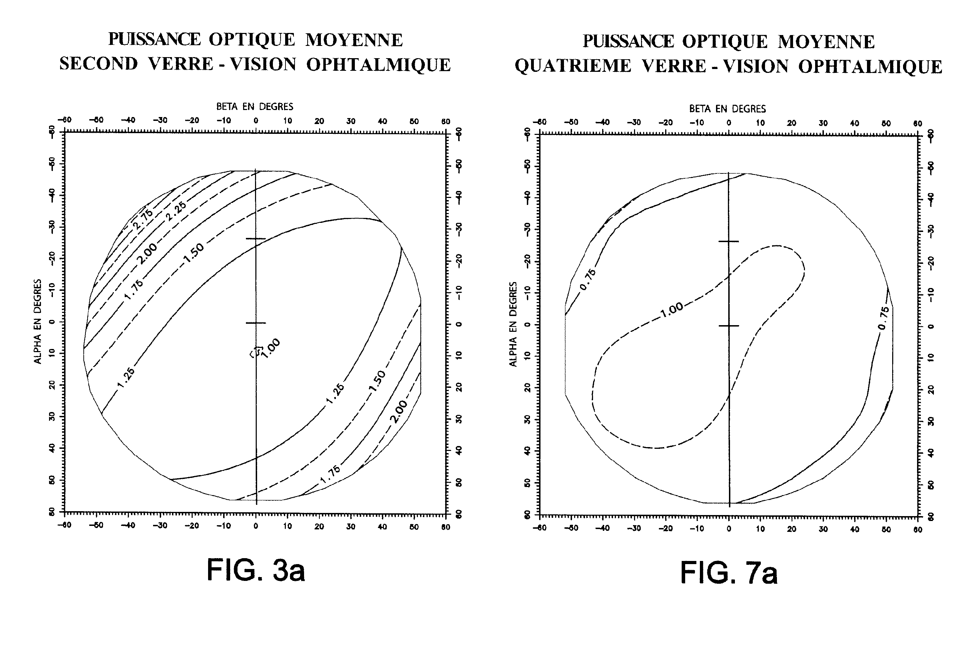

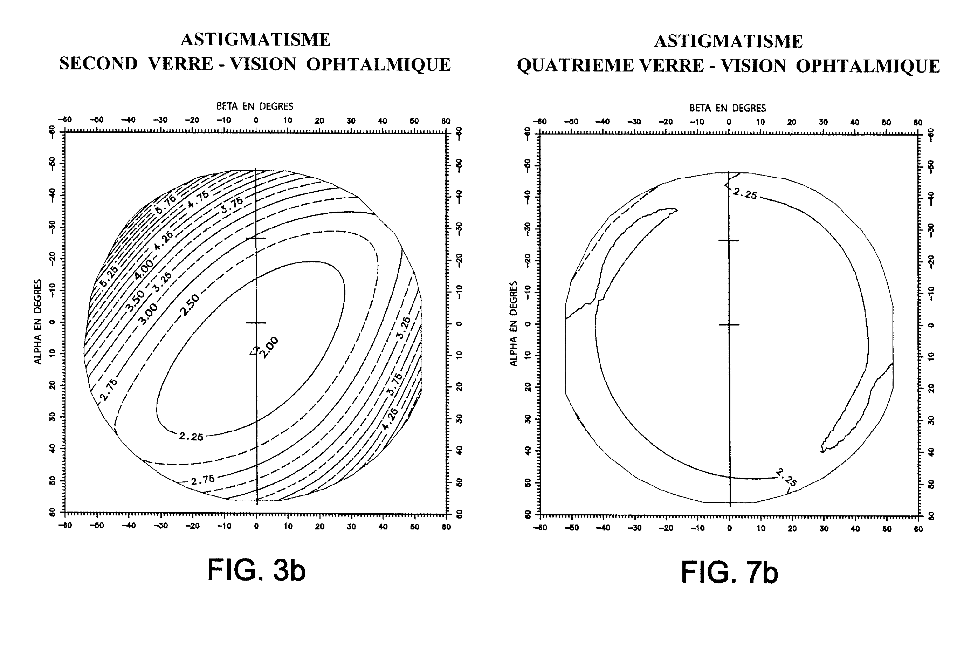

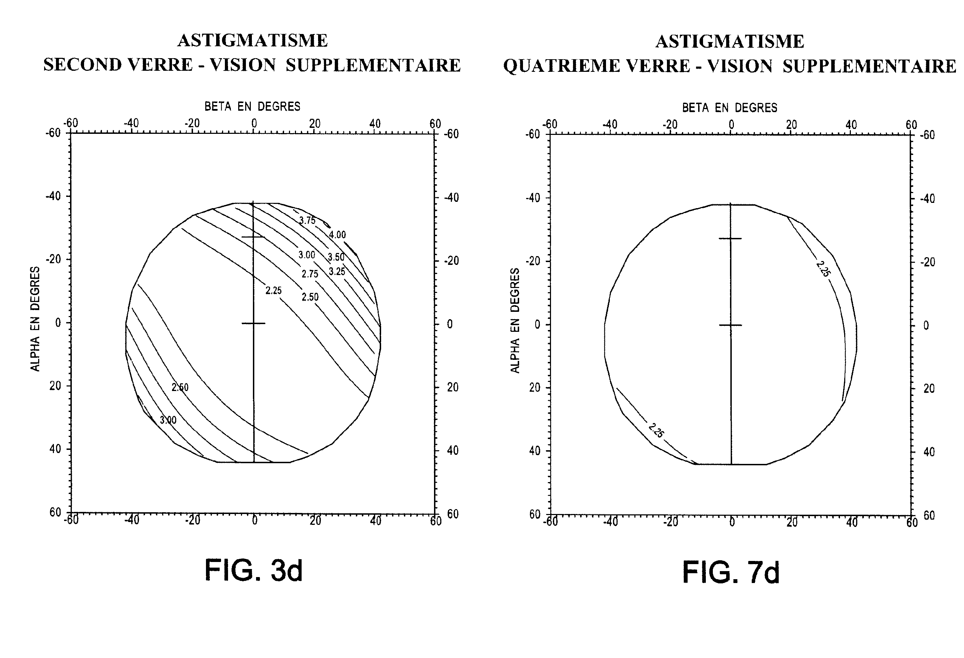

Les figures 2a-2d et 3a-3d concernent des verres de lunettes à deux visions ophtalmique et supplémentaire, qui sont réalisés sans mettre en oeuvre la présente invention.

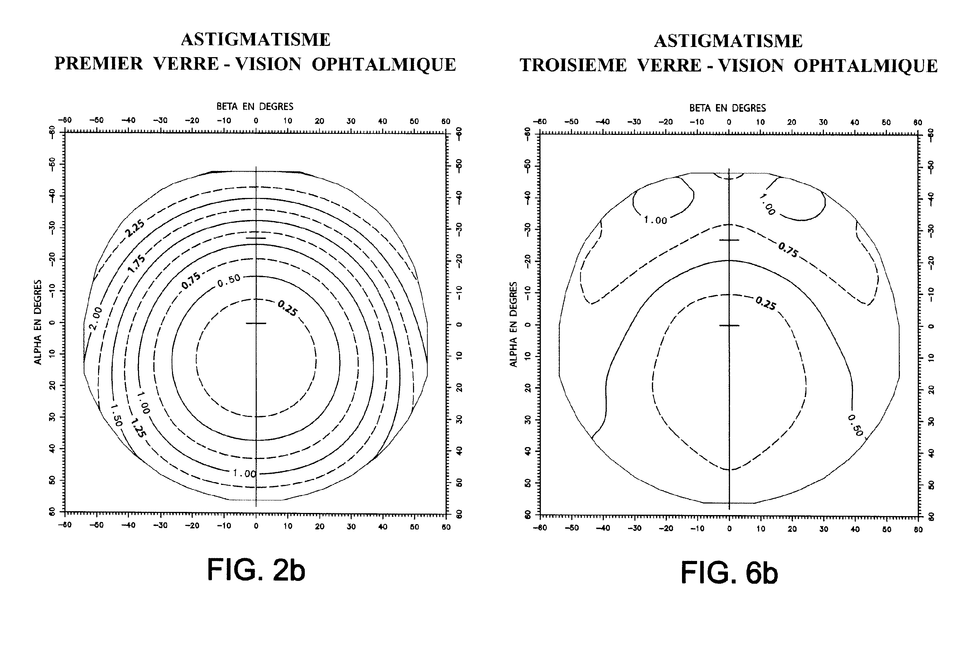

Les figures 2a et 2b sont des cartographies respectives de puissance optique moyenne et d'astigmatisme pour un premier verre de lunettes, qui illustrent ces aberrations pour la vision ophtalmique. Ce premier verre correspond à une prescription de correction de myopie de -4,00 dioptries, sans correction d'astigmatisme. L'indice du matériau réfringent du verre de base 1 est 1,60. Chaque cartographie indique les valeurs de la puissance optique moyenne ou de l'astigmatisme du verre de lunettes, lorsque la direction de regard varie à travers le verre. Les axes d'abscisse et d'ordonnée repèrent des angles $\alpha$ et $\beta$ entre la direction de regard et une direction de référence, respectivement dans un plan vertical et dans un plan horizontal. La direction de référence qui est considérée passe par un point de référence du verre de lunettes. Ce point de référence peut être notamment la croix de montage qui est utilisée pour positionner le verre dans un logement de monture de lunettes. Chaque courbe dans ces cartographies relie des directions de regard qui correspondent à une même valeur de puissance optique moyenne ou d'astigmatisme, indiquée en dioptries sur la courbe concernée. Comme le montre la figure 2a, un écart négatif de puissance optique moyenne, qui atteint -1,25 dioptries, apparaît en périphérie du verre pour la vision ophtalmique, par rapport à la valeur prescrite produite pour la direction de référence ($\alpha=\beta=0$). Cet écart est dû à une courbure de la face antérieure FA du verre qui est inadaptée pour les aberrations optiques, parce que cette courbure a été réduite pour limiter l'effort accommodatif du porteur en vision supplémentaire. Pour la même raison, la cartographie de la figure 2b montre que l'astigmatisme croît fortement lorsque la direction de regard s'écarte de la direction de référence, vers la périphérie du verre.

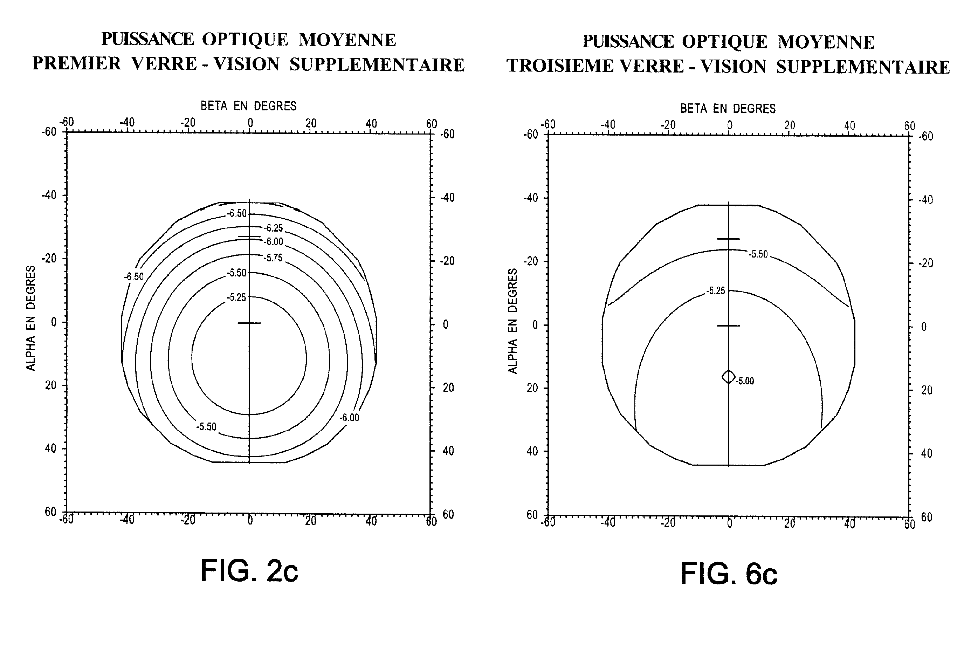

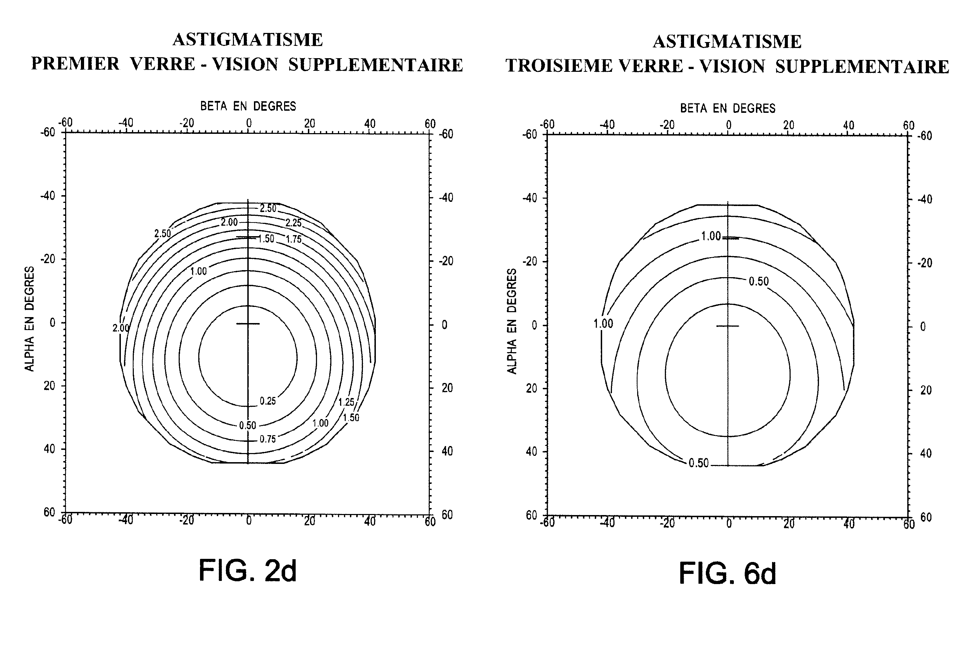

Les figures 2c et 2d sont des cartographies de puissance optique moyenne et d'astigmatisme, qui ont été établies encore pour le même premier verre de lunettes mais pour la vision supplémentaire. La figure 2c montre en particulier que l'effort accommodatif qui a été sélectionné est de -1,00 dioptrie environ, d'après la valeur de la puissance optique moyenne pour la direction de référence.

Dans le cas d'un tel verre de lunettes pour porteur myope, l'écart de puissance optique moyenne est négatif pour les deux visions (figures 2a et 2c), dans la zone périphérique du verre par rapport à la direction de référence. Il peut donc être compensé éventuellement par une accommodation de l'oeil du porteur, lorsqu'il regarde obliquement à travers le verre.

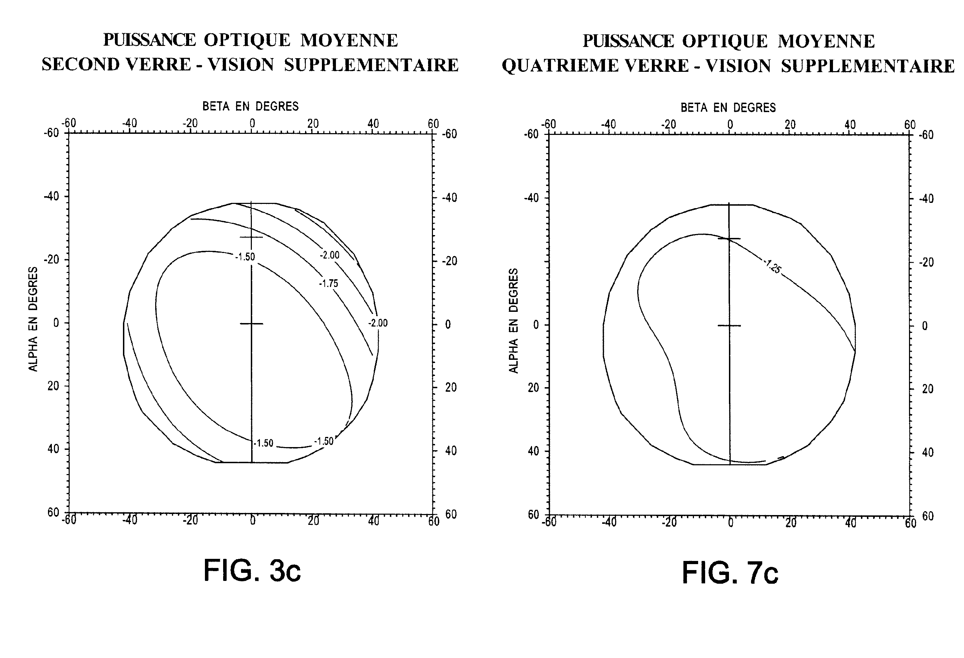

Les figures 3a à 3d correspondent respectivement aux figures 2a à 2d pour un second verre à deux visions, qui correspond à une prescription d'hypermétropie +2,00 dioptries, -2,00 dioptries et 135°, exprimée en valeurs de cylindre selon la convention négative. La puissance optique moyenne pour la direction de référence ($\alpha=\beta=0$) est alors d'environ +1,00 dioptrie (figure 3a). Pour une telle correction d'hypermétropie, la courbure insuffisante de la face antérieure FA du verre provoque un écart entre la puissance optique moyenne du verre dans la zone périphérique et la valeur pour la direction de référence, qui est positif pour la vision ophtalmique. Il est donc opposé à la faculté d'accommodation de l'oeil, et la gêne ophtalmique qui en résulte est alors très importante. Par ailleurs, l'effort accommodatif de ce second verre pour la vision supplémentaire est d'environ -2,25 dioptries (figures 3a et 3c).

Les figures 2a à 2d et 3a à 3d montrent donc que les aberrations optiques des deux verres réduisent le champ de la vision ophtalmique et celui de la vision supplémentaire dans les deux plans horizontal et vertical. Cette réduction est particulièrement pénalisante pour la vision ophtalmique, notamment lorsque les dimensions du logement du verre dans la monture de lunettes sont grandes. La réduction du champ de la vision supplémentaire empêche par ailleurs d'utiliser des inserts à large fenêtre de sortie.

La présente invention a alors pour objectif de fournir un verre de lunettes qui est adapté pour procurer les deux visions au porteur, et pour lequel les inconvénients précités sont réduits.

En particulier, l'un des buts de l'invention consiste à augmenter les champs de vision d'un tel verre de lunettes, pour la vision ophtalmique et pour la vision supplémentaire.

Pour cela, l'invention propose un procédé de réalisation d'un verre de lunettes à au moins deux visions tel que décrit précédemment, qui comprend les étapes successives suivantes :

/1/ obtenir une prescription ophtalmique pour le porteur du verre ;

/2/ déterminer une prescription supplémentaire pour la vision supplémentaire, à partir de la prescription ophtalmique et d'une position de l'image supplémentaire ;

/3/ déterminer au moins une valeur de courbure pour la face postérieure du verre, qui correspond à la prescription déterminée à l'étape /2/, en un point de prescription supplémentaire ;

/4/ déterminer au moins une valeur de courbure pour la face antérieure du verre en un point de prescription ophtalmique, en fonction de la prescription obtenue à l'étape /1/ et de la valeur de courbure de la face postérieure du verre déterminée à l'étape /3/ ;

/5/ calculer des valeurs de la face postérieure du verre, au moins à l'intérieur d'une zone de celle-ci qui correspond à une fenêtre de sortie de l'insert, ces valeurs étant adaptées pour que cette zone de la face postérieure produise une correction pour la vision supplémentaire qui correspond à la prescription déterminée à l'étape /2/ ;

/6/ calculer des valeurs de la face antérieure du verre, adaptées pour que le verre produise une correction pour la vision ophtalmique qui correspond à la prescription obtenue à l'étape /1/, lorsque la face postérieure du verre possède les valeurs calculées à l'étape /5/ ; et

/7/ réaliser le verre de lunettes avec les valeurs des faces antérieure et postérieure calculées respectivement aux étapes /5/ et /6/.

Ainsi, un verre de lunettes selon l'invention procure simultanément la vision ophtalmique et une vision supplémentaire, avec des caractéristiques optiques respectives qui sont adaptées pour que ces deux visions soient simultanément perçues de façon nette par le porteur. Autrement dit, le verre possède deux valeurs de puissance optique, respectivement pour la vision ophtalmique et pour la vision supplémentaire, qui sont adaptées au porteur pour des directions de regard qui passent par les points de prescription correspondants.

En outre, les deux visions sont perçues de façon nette non seulement pour ces directions qui passent par les points de prescription, mais aussi pour des directions de regard qui passent en dehors de ces points. Autrement dit, le verre procure des champs de vision qui sont larges, à la fois pour la vision ophtalmique et pour la vision supplémentaire.

Notamment, le champ de vision pour la vision supplémentaire peut contenir entièrement la fenêtre de sortie de l'insert. Le confort de vision qui est procuré au porteur pour les deux visions est alors amélioré.

Selon des modes de mise en oeuvre particuliers des étapes /5/ et /6/ d'un procédé selon l'invention, et qui peuvent être avantageusement combinés, les valeurs de la face postérieure du verre de lunettes d'une part, et celles de la face antérieure du verre d'autre part, peuvent être calculées par optimisation numérique.

Selon un perfectionnement de l'invention, lorsque la face postérieure du verre est calculée par optimisation à l'étape /5/, son calcul peut être effectué différemment dans une zone de cette face qui correspond à la fenêtre de sortie de l'insert, et dans une zone résiduelle de la face postérieure. Dans ce cas, les valeurs de la face postérieure à l'intérieur de la zone qui correspond à la fenêtre de sortie d'insert sont encore déterminées pour optimiser les caractéristiques optiques du verre pour la vision supplémentaire. Mais les valeurs de la face postérieure dans la zone résiduelle sont déterminées selon ce perfectionnement pour optimiser les caractéristiques optiques du verre pour la vision ophtalmique. Le verre de lunettes qui est ainsi réalisé procure au porteur un champ visuel pour la vision ophtalmique qui est encore plus grand.

L'invention propose aussi un verre de lunettes qui procure au moins deux visions, dont la vision ophtalmique et une vision supplémentaire, tel que connu de l'art antérieur, mais qui est caractérisé en ce que ses deux faces antérieure et postérieure ont des formes complexes.

Un tel verre peut être réalisé en utilisant un procédé selon l'invention.

D'autres particularités et avantages de la présente invention apparaîtront dans la description ci-après d'exemples de mise en oeuvre non limitatifs, en référence aux dessins annexés, dans lesquels :

- les figures 1a et 1b, déjà décrites, sont deux vues d'un verre de lunettes procurant deux visions tel que connu de l'art antérieur, respectivement en perspective et de dessus ;

- les figures 2a et 2b, déjà décrites, sont des cartographies de puissance optique moyenne et d'astigmatisme, respectivement, pour un premier verre de lunettes conforme aux figures 1a et 1b et pour la vision ophtalmique ;

- les figures 2c et 2d, déjà décrites, sont des cartographies de puissance optique moyenne et d'astigmatisme, respectivement, pour le premier verre des figures 2a et 2b et pour la vision supplémentaire ;

- les figures 3a à 3d, déjà décrites, correspondent respectivement aux figures 2a à 2d, pour un second verre de lunettes conforme aux figures 1a et 1b ;

- la figure 4 est un diagramme synoptique des étapes d'un procédé selon l'invention ;

- la figure 5 est un diagramme synoptique complémentaire, pour un perfectionnement de l'invention ; et

- les figures 6a à 6d et 7a à 7d correspondent respectivement aux figures 2a à 2d et 3a à 3b en utilisant l'invention.

Dans la description qui suit, les connaissances générales du domaine ophtalmique ne sont pas reprises en détail. Tel est le cas, notamment, des bases de Tscherning qui sont adaptées pour réduire les aberrations optiques en dehors du point de prescription. Il en est de même des procédés numériques d'optimisation des verres ophtalmiques, qui sont couramment utilisés depuis plusieurs années. Il en est aussi de même pour le procédé d'usinage qui est utilisé pour fabriquer le verre de lunettes.

L'invention consiste à réaliser un verre de lunettes qui est conforme aux figures 1 a et 1 b en calculant préalablement des formes respectives pour la face postérieure FP puis pour la face antérieure FA. Le verre final est ensuite réalisé en usinant une ébauche du verre de base 1 qui incorpore l'insert 2. Cette ébauche est usinée sur ses deux faces FP et FA, conformément aux formes qui ont été calculées pour chacune d'elles, et qui sont des formes complexes. De façon connue, une face présente deux valeurs de courbure en chaque point de celle-ci, qui sont maximale et minimale respectivement selon deux directions perpendiculaires entre elles passant par le point concerné. On entend alors par face de forme complexe une face du verre dont l'une au moins des valeurs de courbure varie continûment entre des points de cette face qui sont différents. Une face complexe est donc dépourvue de marches et de discontinuités de courbure à l'intérieur de zones de cette face. La contribution d'une face du verre de lunettes à la puissance optique moyenne du verre pour une direction de regard est donnée par :

$$P_A = (n - 1) \times (C_{A\,max} + C_{A\,min})/2 \qquad (1a)$$

$$P_P = (1 - n) \times (C_{P\,max} + C_{P\,min})/2 \qquad\qquad (1b)$$

où $P_A$ / $P_P$ désigne la contribution de la face antérieure FA / postérieure FP, n est l'indice du milieu réfringent qui constitue le verre de base 1 au niveau de cette face, et $C_{A\,max}$ / $C_{P\,max}$ et $C_{A\,min}$ / $C_{P\,min}$ sont les courbures maximale et minimale de la face FA / FP au point d'intersection de celle-ci avec la direction de regard.

On décrit maintenant une première phase d'un procédé selon l'invention, qui aboutit à une détermination de la courbure de la face antérieure FA du verre de lunettes au point de prescription ophtalmique. Dans le jargon de l'Homme du métier, cette première phase est appelée découpe de bases. Elle permet de sélectionner l'ébauche du verre parmi une gamme d'ébauches qui ont des courbures variables au point de prescription ophtalmique. Usuellement, l'ébauche est sélectionnée en fonction de la prescription ophtalmique qui est établie pour le porteur, selon un compromis entre des aberrations optiques du verre de lunettes qui sont réduites et une courbure de la face FA qui est limitée pour raison d'esthétisme du verre.

Pour l'invention, cette phase de découpe de bases possède deux buts supplémentaires. D'une part, la courbure de la face antérieure FA doit être compatible avec la disposition de l'insert 2 au sein du verre de base 1, sans que ce verre de base soit trop épais. D'autre part, elle doit aboutir à un effort accommodatif qui est compatible avec un bon confort visuel, lors de transitions du regard du porteur entre l'image ophtalmique et l'image supplémentaire.

Dans le verre de lunettes qui est finalement réalisé, la correction ophtalmique résulte des formes des deux faces FA et FP. Mais la correction qui est produite par le verre pour la vision supplémentaire, appelée correction supplémentaire, n'est produite que par la face postérieure FP. Pour cette raison, l'oeil du porteur pourra produire une accommodation lorsqu'il passera de la vision ophtalmique à travers le verre de lunettes à la vision supplémentaire. L'amplitude de cette accommodation est appelée effort accommodatif. Elle résulte essentiellement de la forme de la face antérieure FA du verre et de la position de l'image supplémentaire telle que celle-ci est produite par l'insert 2. Si cette image supplémentaire est située à grande distance en avant du verre, en étant virtuelle, et si l'on admet que la puissance optique moyenne du verre pour la vision ophtalmique peut être estimée approximativement en additionnant les contributions algébriques des deux faces FA et FP du verre, alors l'effort accommodatif peut être estimé approximativement en soustrayant la contribution algébrique de la face postérieure FP du verre à la puissance optique moyenne du verre de lunettes pour la vision ophtalmique.

On obtient tout d'abord une correction ophtalmique qui est prescrite pour le porteur du verre, en fonction de son amétropie. Cette correction ophtalmique peut être déterminée de façon usuelle, et concerne la vision ophtalmique du porteur à travers le verre de lunettes. Elle comprend, de façon usuelle, plusieurs valeurs qui déterminent une puissance optique moyenne et une correction d'astigmatisme. La correction ophtalmique est établie pour un point de la face antérieure du verre qui est appelé point de prescription ophtalmique. Ce point de prescription ophtalmique correspond en général à une direction de regard droit devant pour le porteur. Dans ce cas, il peut être confondu avec la croix de montage qui est utilisée pour positionner le verre dans un logement de monture de lunettes. Pour la présente invention, le point de prescription ophtalmique peut aussi définir une direction de regard à travers le verre, qui est centrale dans le champ de la vision ophtalmique.

On fixe alors une valeur pour l'effort accommodatif, notamment en fonction de l'âge du porteur. Cette valeur doit être négative en général. Elle dépend de la position de l'image supplémentaire telle que celle-ci est produite par la lumière supplémentaire VS juste après la fenêtre de sortie FS de l'insert 2. Une prescription pour la vision supplémentaire est alors déduite pour le porteur. Elle est appelée prescription supplémentaire. Lorsque l'image supplémentaire qui est produite par l'insert 2 est située à grande distance en avant du verre de lunettes, typiquement à une distance supérieure à 2 m (mètre), la prescription supplémentaire est égale à la somme de la prescription ophtalmique et de l'effort accommodatif.

De préférence, la prescription supplémentaire est déterminée de sorte que l'effort accommodatif du porteur soit inférieur à 2,25 dioptries en valeur absolue.

Les valeurs d'astigmatisme de la prescription supplémentaire peuvent être identiques à celles de la prescription ophtalmique.

La courbure de la face postérieure FP du verre est alors déterminée, notamment à partir de la prescription supplémentaire. Elle est ainsi déterminée pour un point de référence de la face FP, qui est appelé point de prescription supplémentaire. Ce point de prescription supplémentaire peut correspondre à la direction du regard du porteur qui passe au milieu de la face de sortie FS de l'insert 2. De façon générale, le point de prescription supplémentaire peut être distinct du point de prescription ophtalmique. Tel est le cas, notamment, lorsque la fenêtre de sortie FS de l'insert 2 est décalée latéralement et/ou vers le haut du verre de lunettes, par rapport à la croix de montage du verre. En première approximation, la relation suivante peut être utilisée pour calculer la courbure $C_P$ de la face FP au point de prescription supplémentaire :

$$C_P = PS/(1 - n) \qquad (2)$$

où PS est la prescription supplémentaire. La valeur de $C_P$ est négative, signifiant que la face FP du verre est concave. En fait, lorsque la prescription ophtalmique comporte une correction d'astigmatisme, la relation (2) est appliquée pour chacune des deux directions perpendiculaires qui sont indiquées par la prescription, afin d'obtenir deux valeurs de courbure respectivement maximale et minimale.

La courbure $C_A$ de la face antérieure FA du verre au point de prescription ophtalmique peut ensuite être déterminée, par exemple en utilisant la relation suivante :

$$C_A = PO/(n - 1) + C_P \qquad (3)$$

où PO est la prescription ophtalmique qui a été obtenue initialement pour le porteur. Conformément à la pratique usuelle, la correction d'astigmatisme peut n'être produite que par la face postérieure FP, de sorte que la face antérieure FA est sphérique au point de prescription supplémentaire. La valeur de base B de la face FA est alors donnée par la relation :

$$B = (n - 1) \times C_A \qquad (4)$$

De préférence, cette valeur de base B est inférieure ou égale à 2,25 dioptries, lorsqu'elle est établie pour un indice de réfraction n du milieu réfringent qui est égal à 1,60. De cette façon la courbure de la face FA du verre de lunettes est compatible avec les formes de la plupart des inserts 2, tout en conservant un bon aspect esthétique. En outre l'effort accommodatif du porteur est simultanément limité, de sorte que le porteur passe confortablement de la vision ophtalmique à la vision supplémentaire.

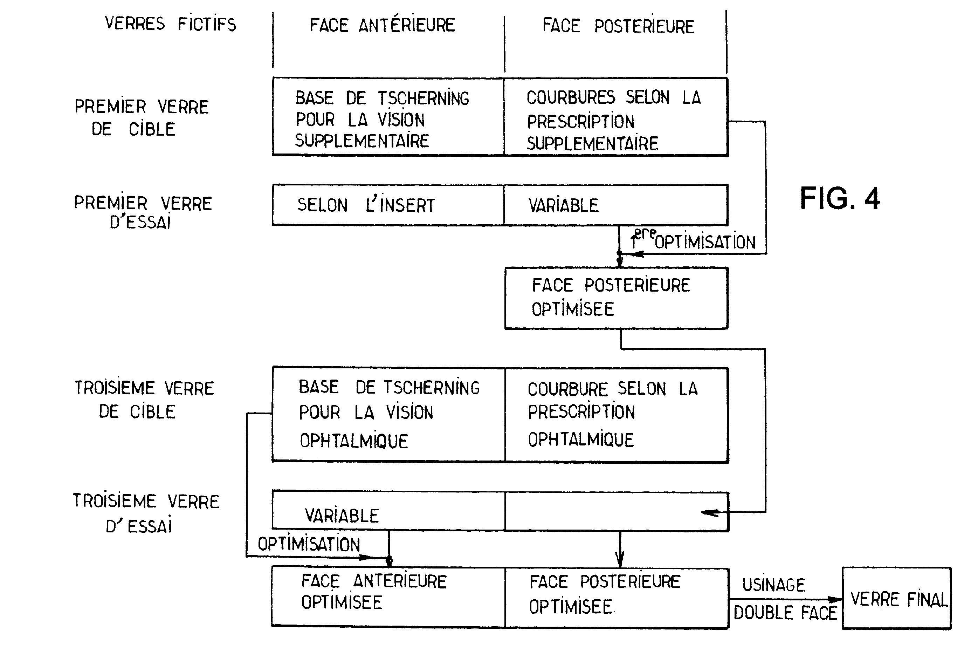

La valeur de base qui est ainsi obtenue pour la face antérieure FA du verre de base 1 ne correspond pas, de façon générale, à la valeur qui est optimale pour réduire les aberrations optiques du verre. En particulier, un verre qui aurait des faces FA et FP sphériques, respectivement avec les valeurs de courbures $C_A$ et $C_P$, présenterait des variations importantes de la puissance optique par rapport aux prescriptions ophtalmique et supplémentaire, pour des directions de regard qui ne passent pas par les points de prescription correspondants. Pour cette raison, la face postérieure FP du verre est calculée dans une seconde phase d'un procédé selon l'invention, afin de réduire des aberrations optiques de la vision supplémentaire. La face antérieure FA est calculée ensuite, dans une troisième phase du procédé, pour réduire des aberrations optiques de la vision ophtalmique. Les différentes étapes de ces deux phases sont indiquées sur la figure 4.

La deuxième phase du procédé, lorsqu'elle procède par une optimisation numérique, débute par la construction d'un premier verre fictif de cible. Il s'agit d'un verre connu qui correspond à la prescription supplémentaire, et qui est pris pour référence parce qu'il présente des aberrations optiques qui sont particulièrement réduites. En particulier, sa puissance optique moyenne varie peu par rapport à la valeur de prescription pour les directions de regard qui ne passent pas par le point de prescription ophtalmique. De même, il présente des valeurs d'astigmatisme - amplitude et orientation de l'axe d'astigmatisme - en tout point qui sont proches des valeurs prescrites. Les autres aberrations optiques du premier verre fictif de cible ont aussi des amplitudes qui sont faibles.

Ainsi, le premier verre fictif de cible peut être constitué du milieu réfringent du verre de base 1, et peut comprendre :

- une face antérieure fictive, qui a une première valeur de base au point de prescription supplémentaire, cette première valeur de base étant sélectionnée pour réduire des aberrations optiques de la vision supplémentaire par rapport à la prescription supplémentaire ; et

- une face postérieure fictive, qui est adaptée pour produire au point de prescription supplémentaire, en combinaison avec la face antérieure fictive de ce premier verre fictif de cible, une correction de la vision supplémentaire conforme à la prescription supplémentaire.

Par exemple, la face antérieure du premier verre fictif de cible peut posséder la valeur de base de Tscherning qui est associée à la prescription supplémentaire. Sa face postérieure peut alors être sphérique ou torique, avec des courbures qui sont uniformes et qui produisent une correction optique correspondant à la prescription supplémentaire, pour la lumière supplémentaire.

Un premier verre fictif d'essai est aussi construit, qui comprend lui-même :

- une face antérieure fictive, qui est définie en fonction de l'insert 2 ;

- l'insert 2 lui-même ;

- la partie postérieure 1 p du matériau réfringent ; et

- une face postérieure complexe, qui est variable.

La face antérieure du premier verre fictif d'essai peut être déterminée de plusieurs façons, en fonction de la forme plane ou courbe de l'insert 2, de son épaisseur, de ses caractéristiques de réfringence et de la position de l'image supplémentaire. Elle est définie de façon à rendre compte de la position de l'image supplémentaire qui est produite par les rayons provenant de l'insert 2 qui se propagent dans la partie 1 p du matériau réfringent.

La face postérieure du premier verre fictif d'essai peut posséder initialement, en tout point de cette face au moins dans la zone Z qui correspond à la fenêtre de sortie FS de l'insert 2, la ou les valeur(s) de courbure qui a (ont) été déterminée(s) plus haut pour le point de prescription supplémentaire. Dans ce cas, le premier verre fictif d'essai possède des courbures qui sont uniformes au moins dans la zone Z.

On réalise alors une première optimisation, de sorte que le premier verre fictif d'essai et le premier verre fictif de cible aient des caractéristiques optiques qui sont sensiblement égales au moins à l'intérieur de la zone Z. Pendant cette première optimisation, la face antérieure du premier verre fictif d'essai est fixe. L'optimisation peut être effectuée, de façon connue, en réduisant la valeur d'une fonction de mérite qui quantifie des écarts entre les caractéristiques optiques respectives du premier verre fictif de cible et celles du premier verre fictif d'essai, pour les points d'un maillage défini sur ces verres fictifs. Le résultat de l'optimisation est constitué par les valeurs de la face postérieure du premier verre fictif d'essai aux points du maillage. Ces valeurs sont alors attribuées à la face postérieure FP du verre de lunettes. Eventuellement, elles peuvent être converties à ce niveau du procédé. Par exemple, les valeurs de la face postérieure du premier verre fictif d'essai peuvent être des valeurs de courbure, et elles sont converties en valeurs sagittales pour le verre de lunettes. La face postérieure FP du verre qui est ainsi déterminée possède une forme qui est complexe.

Eventuellement, les valeurs de la face postérieure FP du verre de lunettes peuvent encore être ajustées lors d'une étape supplémentaire du procédé. Cet ajustement peut compenser une première modification d'un écartement entre les faces FA et FP, qui est destinée à assurer une marge entre l'insert 2 et la face FP du verre de lunettes. Cette marge peut être située entre un point central de la face postérieure de l'insert 2 et la face FP du verre de lunettes. De façon connue, un tel ajustement consiste à ajouter une composante torique aux valeurs de la face FP.

Selon un perfectionnement de l'invention, la face postérieure FP du verre de lunettes peut être calculée de la façon qui vient d'être décrite uniquement à l'intérieur de la zone Z qui correspond à la fenêtre de sortie FS de l'insert 2.

Ce perfectionnement est surtout avantageux lorsque les deux axes optiques respectifs de la vision ophtalmique et de la vision supplémentaire sont distincts. Sur la figure 1b, les références VO et VO' désignent respectivement deux rayons de la lumière ophtalmique, dont le premier traverse l'insert 2 et le second passe à l'extérieur de la zone Z. Le présent perfectionnement permet de calculer la face postérieure FP du verre de lunettes pour le rayon VS de la vision supplémentaire, et pour le rayon VO' de la vision ophtalmique.

La première optimisation qui a été décrite ci-dessus est alors limitée à l'intérieur de la zone Z. Etant donné que la zone Z est plus petite que la face postérieure FP, la première optimisation peut aboutir à une réduction supérieure des aberrations optiques à l'intérieur de cette zone.

Dans ce cas et d'une façon qui est alors facultative, la face postérieure FP peut être calculée en dehors de la zone Z en effectuant une seconde optimisation, pour réduire les aberrations optiques de la vision ophtalmique.

Pour cela, un second verre fictif de cible est construit, qui est constitué du milieu réfringent et qui comprend :

- une face antérieure fictive, qui a une seconde valeur de base au point de prescription ophtalmique, cette seconde valeur de base étant sélectionnée pour réduire des aberrations optiques de la vision ophtalmique par rapport à la prescription ophtalmique ; et

- une face postérieure fictive, qui est adaptée pour produire au point de prescription ophtalmique, en combinaison avec la face antérieure fictive de ce second verre fictif de cible, une correction de la vision ophtalmique conforme à la prescription ophtalmique.

Autrement dit, le second verre fictif de cible est un verre de référence qui correspond à la prescription ophtalmique. Par exemple, sa face antérieure peut posséder la valeur de base de Tscherning qui est associée à cette prescription ophtalmique. Sa face postérieure peut alors être sphérique ou torique, avec des courbures qui sont uniformes et qui produisent une correction correspondant à la prescription ophtalmique, pour la lumière ophtalmique.

Un second verre fictif d'essai, qui est défini à l'extérieur de la zone Z, comprend lui-même :

- une face antérieure fictive qui possède, au point de prescription ophtalmique, la valeur de courbure qui a été déterminée antérieurement ;

- la partie antérieure du milieu réfringent 1a ;

- la partie intermédiaire 1 b du milieu réfringent ou l'insert 2 ;

- la partie postérieure du milieu réfringent 1 p ; et

- une face postérieure complexe, qui est variable.

La face antérieure du second verre fictif d'essai peut posséder une courbure qui est uniforme sur toute son étendue. Elle est fixe pendant l'optimisation du second verre fictif d'essai.

Eventuellement, la face postérieure du second verre fictif d'essai peut aussi posséder initialement, avant optimisation et à l'extérieur de la zone Z, des valeurs uniformes de courbure. Celles-ci peuvent être déterminées pour que le second verre fictif d'essai produise au point de prescription ophtalmique, une correction optique pour la vision ophtalmique qui correspond à la prescription ophtalmique.

L'algorithme d'optimisation qui est utilisé pour le second verre fictif d'essai peut être analogue à celui qui a été utilisé auparavant pour le premier verre fictif d'essai.

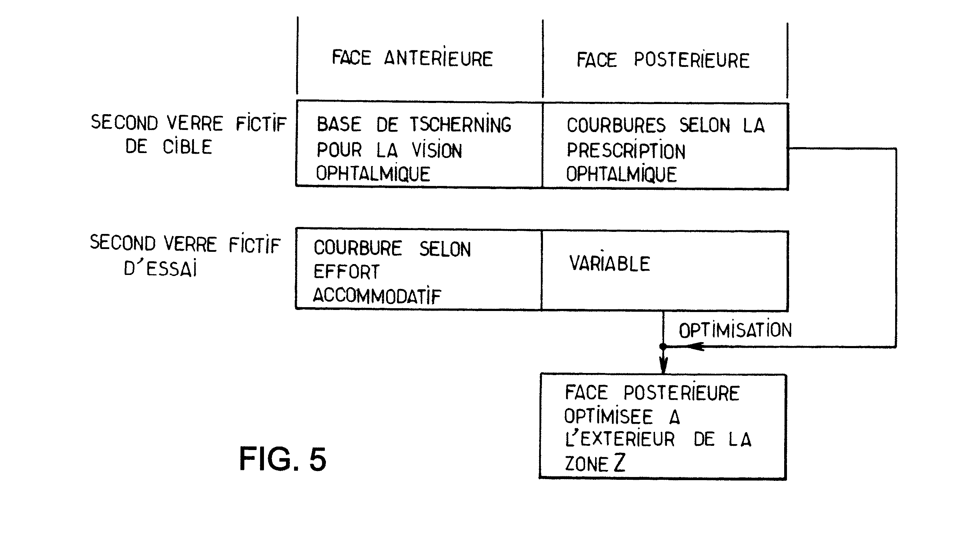

La figure 5 illustre cette optimisation supplémentaire du perfectionnement de l'invention. Le second verre fictif d'essai est optimisé de sorte qu'il ait, à l'extérieur de la zone Z, des caractéristiques optiques qui sont sensiblement égales à celles du second verre fictif de cible. A l'extérieur de la zone Z, les valeurs de la face postérieure du verre de lunettes sont alors obtenues à partir de celles optimisées de la face postérieure du second verre fictif d'essai. Dans ce cas, la face postérieure FP du verre de lunettes est reconstituée à partir des valeurs résultant de la première optimisation à l'intérieur de la zone Z, et à partir des valeurs résultant de la seconde optimisation à l'extérieur de la zone Z. Eventuellement, des contraintes de continuité de la face postérieure FP à la limite de la zone Z peuvent être introduites dans la seconde optimisation.

Lorsque la première optimisation a été limitée à l'intérieur de la zone Z et que la seconde optimisation qui vient d'être décrite n'a pas été effectuée, alors la face postérieure FP du verre de lunettes regroupe les valeurs qui résultent de la première optimisation à l'intérieur de la zone Z, avec les valeurs initiales de la face postérieure du premier verre fictif de cible à l'extérieur de la zone Z.

Dans la troisième phase du procédé, on calcule la face antérieure FA du verre final pour minimiser les aberrations optiques de la vision ophtalmique du porteur. En se référant de nouveau à la figure 4, un troisième verre fictif de cible est maintenant construit, qui est constitué du milieu réfringent du verre de base 1 et qui comprend :

- une face antérieure fictive, qui a une troisième valeur de base au point de prescription ophtalmique, la troisième valeur de base étant sélectionnée pour réduire des aberrations optiques de la vision ophtalmique par rapport à la prescription ophtalmique ; et

- une face postérieure fictive, qui est adaptée pour produire au point de prescription ophtalmique, en combinaison avec la face antérieure fictive de ce troisième verre fictif de cible, une correction de la vision ophtalmique conforme à la prescription ophtalmique.

Le troisième verre fictif de cible peut donc être identique au second verre fictif de cible qui a été utilisé précédemment dans le perfectionnement.

Un troisième verre fictif d'essai comprend :

- une face antérieure complexe, qui est variable ;

- la partie antérieure du milieu réfringent 1a ;

- la partie intermédiaire du milieu réfringent 1 b ou l'insert 2, selon si le rayon qui est considéré traverse ou non l'insert 2 ;

- la partie postérieure du milieu réfringent 1 p ; et

- la face postérieure qui a été obtenue pour le verre de lunettes à l'issue de la seconde phase du procédé.

La face antérieure du troisième verre fictif d'essai peut posséder initialement, avant optimisation et en tout point de cette face, la valeur de courbure qui a été déterminée antérieurement pour le point de prescription ophtalmique.

On réalise alors une dernière optimisation, de sorte que le troisième verre fictif d'essai et le troisième verre fictif de cible aient des caractéristiques optiques qui sont sensiblement égales. Cette dernière optimisation peut encore utiliser un algorithme qui est similaire à celui de la première optimisation. Toutefois, la face postérieure du troisième verre fictif d'essai est maintenant fixe, et sa face antérieure est variable. En outre, l'insert 2 ou la partie intermédiaire 1b du milieu réfringent est pris en compte selon si le rayon considéré traverse ou non l'insert (rayon VO vs rayon VO' sur la figure 1 b).

A la fin de l'optimisation, les valeurs qui sont obtenues pour la face antérieure du troisième verre fictif d'essai sont attribuées à la face antérieure FA du verre de lunettes. Eventuellement, elles peuvent aussi être converties à ce niveau. Par exemple, les valeurs de la face antérieure du troisième verre fictif d'essai peuvent être des valeurs de courbure, et elles sont converties en valeur sagittales pour la même face. De façon générale, la face antérieure FA du verre de lunettes qui est ainsi calculée possède aussi une forme qui est complexe.

Eventuellement, les valeurs qui ont été obtenues ainsi pour la face antérieure du verre de lunettes peuvent être ajustées à ce niveau du procédé, lors d'une étape supplémentaire. Un tel ajustement peut compenser une seconde modification de l'écartement entre les faces FA et FP. De cette façon, une marge prédéterminée peut être introduite entre le bord 2b de l'insert 2 et la face FA. Un tel ajustement consiste à ajouter une composante torique aux courbures qui ont été calculées pour la face FA dans la troisième phase du procédé.

Dans une quatrième et dernière phase du procédé, le verre de lunettes est réalisé en usinant l'ébauche du verre de base 1 qui incorpore l'insert 2. Cette ébauche est usinée sur ses deux faces FP et FA. La face FP est usinée conformément à la face postérieure qui a été calculée dans la deuxième phase du procédé, et la face FA est usinée conformément à la face antérieure qui a été calculée dans la troisième phase. De préférence, cet usinage est contrôlé numériquement à partir des valeurs calculées.

Pour raison de simplicité mais sans que cela constitue une limitation, le point de prescription supplémentaire a été choisi confondu avec le point de prescription ophtalmique pour tous les verres des cartographies présentées en annexe.

Les figures 6a à 6d sont des cartographies d'un verre réalisé selon l'invention, appelé troisième verre, qui correspond à la même prescription ophtalmique que le premier verre des figures 2a à 2d. Les figures 6a et 6b concernent respectivement la puissance optique moyenne et l'astigmatisme pour la vision ophtalmique, et les figures 6c et 6d concernent respectivement la puissance optique moyenne et l'astigmatisme pour la vision supplémentaire. D'après la figure 6a, la puissance optique pour la vision ophtalmique présente des variations qui sont inférieures à 0,5 dioptrie par rapport au point de prescription ophtalmique sur la totalité du verre. A titre de comparaison, cette variation est supérieure à 1,0 dioptrie en valeur absolue pour le premier verre (figure 2a), entre le point de prescription ophtalmique et la périphérie du verre dans le plan horizontal. Simultanément, la comparaison des figures 2b et 6b montre que la largeur du champ de la vision ophtalmique dans le plan horizontal est passée de +/-26° pour le premier verre (figure 2b), à +/-37° environ pour le troisième verre (figure 6b), ces largeurs de champ correspondant à un astigmatisme involontaire qui est inférieur ou égal 0,5 dioptrie. L'astigmatisme du premier verre pour la vision ophtalmique (figure 2b) dépasse 2,0 dioptries à la périphérie du verre dans le plan horizontal, alors qu'il est limité à moins de 0,75 dioptrie pour le troisième verre (figure 6b). Les figures 2c et 6c montrent que l'invention permet aussi de réduire dans une grande mesure les variations de la puissance optique pour la vision supplémentaire : elles sont supérieures à 1,0 dioptrie en valeur absolue dans le plan horizontal pour le premier verre (figure 2c), alors qu'elles sont inférieures à 0,5 dioptrie pour le troisième verre (figure 6c). Enfin, d'après les figures 2d et 6d qui concernent l'astigmatisme, le champ de la vision supplémentaire est augmenté de +/-21 ° pour le premier verre réalisé sans utiliser l'invention, à +/-25° pour le troisième verre réalisé en utilisant l'invention. Simultanément, l'invention a permis de réduire l'astigmatisme dans le plan horizontal à la périphérie du verre, pour la vision supplémentaire, de 2,0 dioptries (figure 2d) à 1,0 dioptrie (figure 6d). En outre, le premier et le troisième verre ont des valeurs qui sont identiques pour l'effort accommodatif.

Les figures 7a à 7d sont des cartographies d'un quatrième verre réalisé selon l'invention, qui correspond à la même prescription ophtalmique que le second verre des figures 3a à 3d. Les figures 7a et 7b concernent respectivement la puissance optique moyenne et l'astigmatisme pour la vision ophtalmique, et les figures 7c et 7d concernent respectivement la puissance optique moyenne et l'astigmatisme pour la vision supplémentaire. Ces cartographies montrent que l'invention a permis, pour cette prescription et pour des valeurs de l'effort accommodatif qui sont encore sensiblement identiques, d'augmenter le champ de la vision ophtalmique à toute la surface du verre. Il en est de même pour la vision supplémentaire alors que ce dernier est limité pratiquement par la fenêtre de sortie FS de l'insert 2.

Ainsi, l'invention permet d'augmenter les champs respectifs des deux visions, ophtalmique et supplémentaire, dans une proportion importante aussi bien pour un verre de correction de myopie que pour un verre de correction d'hypermétropie. En outre, elle permet de réduire, pour les deux visions, les variations de puissance optique et d'astigmatisme qui sont présentes entre le point de prescription pour cette vision et la périphérie du verre.

Enfin, il est entendu que l'invention peut être adaptée de diverses façons par rapport aux modes de mise en oeuvre qui ont été décrits en détail, tout en conservant certains au moins des avantages cités. En particulier, elle peut être appliquée quelque soit la prescription du porteur, et quelque soit la forme de l'insert qui amène la lumière de la vision supplémentaire. De plus, les verres fictifs de cible qui sont utilisés peuvent être différents de ceux qui sont définis à partir des valeurs de base de Tscherning.

Il est encore rappelé qu'un verre de lunettes selon l'invention peut être adapté pour fournir au porteur la vision ophtalmique et la vision supplémentaire simultanément ou alternativement. Lorsque les deux visions sont disponibles simultanément pour le porteur, l'invention permet que les images respectives des deux visions ophtalmique et supplémentaire apparaissent toutes deux nettes pour le porteur, dans une superposition apparente de ces images. Lorsque les deux visions sont disponibles alternativement pour le porteur, l'invention permet au porteur de passer de l'une à l'autre sans modification intermédiaire de son accommodation oculaire. L'invention permet alors de supprimer une fatigue d'accommodation oculaire, et d'augmenter le confort de l'utilisateur ainsi que la fréquence avec laquelle il peut passer de la vision ophtalmique à la vision supplémentaire et vice-versa.

**Revendications**

1. Procédé de réalisation d'un verre de lunettes procurant au moins deux visions, dont une vision ophtalmique et une vision supplémentaire, à un porteur du verre, ledit verre comprenant :

   - une face antérieure (FA) et une face postérieure (FP), ladite face postérieure étant tournée vers l'oeil (10) du porteur pour la position d'utilisation dudit verre ;
   - un milieu réfringent (1) situé entre les faces antérieure et postérieure ; et
   - un insert (2) situé au sein du milieu réfringent, et adapté pour délivrer entre les faces antérieure et postérieure du verre, par une fenêtre de sortie (FS) dudit insert en direction de l'oeil du porteur, une lumière supplémentaire (VS) formant une image supplémentaire visible par le porteur dans la position d'utilisation du verre,

   la vision ophtalmique correspondant à une image formée par de la lumière (VO) ayant traversé successivement la face antérieure (FA), une partie antérieure (1a) du milieu réfringent située sur un côté antérieur de l'insert, l'insert (2) ou une partie intermédiaire (1b) du milieu réfringent située à l'extérieur d'un bord périphérique (2b) dudit insert, une partie postérieure (1p) du milieu réfringent située sur un côté postérieur de l'insert, et la face postérieure (FP) du verre ; et
   la vision supplémentaire correspondant à l'image supplémentaire formée par ladite lumière supplémentaire (VS) traversant l'insert (2), la partie postérieure (1p) du milieu réfringent et la face postérieure (FP) du verre ;
   le procédé comprenant les étapes successives suivantes :

   /1/ obtenir une prescription ophtalmique pour le porteur du verre ;
   /2/ déterminer une prescription supplémentaire pour ladite vision supplémentaire à partir de la prescription ophtalmique et d'une position de l'image supplémentaire ;
   /3/ déterminer au moins une valeur de courbure pour la face postérieure (FP) du verre correspondant à la prescription déterminée à l'étape /2/, en un point de prescription supplémentaire ;
   /4/ déterminer au moins une valeur de courbure pour la face antérieure (FA) du verre en un point de prescription ophtalmique, en fonction de la prescription obtenue à l'étape /1/ et de la valeur de courbure de la face postérieure du verre déterminée à l'étape /3/ ;
   /5/ calculer des valeurs de la face postérieure (FP) du verre en dehors du point de prescription supplémentaire, au moins à l'intérieur d'une zone (Z) de ladite face postérieure correspondant à la fenêtre de sortie (FS) de l'insert (2), adaptées pour que ladite zone de face postérieure produise une correction pour la vision supplémentaire qui correspond à la prescription déterminée à l'étape /2/ ;
   /6/ calculer des valeurs de la face antérieure (FA) du verre en dehors du point de prescription ophtalmique, adaptées pour que ledit verre produise une correction pour la vision ophtalmique qui correspond à la prescription obtenue à l'étape /1/, lorsque la face postérieure du verre possède les valeurs calculées à l'étape /5/ ; et
   /7/ réaliser le verre de lunettes avec les valeurs des faces antérieure (FA) et postérieure (FP) calculées respectivement aux étapes /5/ et /6/,

   **caractérisé en ce que** l'étape /5/ comprend les sous-étapes suivantes :

   /5-1/ définir un premier verre fictif de cible constitué du milieu réfringent et comprenant :

      - une face antérieure fictive ayant une première valeur de base au point de prescription supplémentaire, ladite première valeur de base étant sélectionnée pour réduire des aberrations optiques de la vision supplémentaire par rapport à la prescription déterminée à l'étape /2/ ; et
- une face postérieure fictive adaptée pour produire au point de prescription supplémentaire, en combinaison avec la face antérieure fictive dudit premier verre fictif de cible, une correction de la vision supplémentaire conforme à ladite prescription déterminée à l'étape /2/ ; et

/5-2/ optimiser numériquement un premier verre fictif d'essai comprenant :

- une face antérieure fictive définie en fonction de l'insert ;
- l'insert ;
- la partie postérieure du matériau réfringent ; et
- une face postérieure complexe variable,

de sorte que le premier verre fictif d'essai et le premier verre fictif de cible aient des caractéristiques optiques sensiblement égales au moins à l'intérieur du champ de la vision supplémentaire,

les valeurs de la face postérieure (FP) du verre de lunettes étant obtenues à partir de la face postérieure du premier verre fictif d'essai à l'issue de la sous-étape /5-2/,
et ce que que l'étape /6/ comprend les sous-étapes suivantes :

/6-1/ définir un troisième verre fictif de cible constitué du milieu réfringent et comprenant :

- une face antérieure fictive ayant une troisième valeur de base au point de prescription ophtalmique, ladite troisième valeur de base étant sélectionnée pour réduire des aberrations optiques de la vision ophtalmique par rapport à la prescription obtenue à l'étape /1/ ; et
- une face postérieure fictive adaptée pour produire au point de prescription ophtalmique, en combinaison avec la face antérieure fictive dudit troisième verre fictif de cible, une correction de la vision ophtalmique conforme à ladite prescription obtenue à l'étape /1/ ; et

/6-2/ optimiser numériquement un troisième verre fictif d'essai comprenant :

- une face antérieure complexe variable ;
- la partie antérieure du milieu réfringent ;
- la partie intermédiaire du milieu réfringent ou l'insert ;
- la partie postérieure du milieu réfringent ; et
- une face postérieure correspondant aux valeurs calculées à l'étape /5/,

de sorte que le troisième verre fictif d'essai et le troisième verre fictif de cible aient des caractéristiques optiques sensiblement égales,

les valeurs de la face antérieure (FA) du verre de lunettes étant obtenues à partir de la face antérieure du troisième verre fictif d'essai à l'issue de la sous-étape /6-2/.

2. Procédé selon la revendication 1, suivant lequel la prescription supplémentaire est déterminée à l'étape /2/ de sorte qu'un effort accommodatif du porteur soit inférieur à 2,25 dioptries en valeur absolue, lorsque ledit porteur passe de la vision ophtalmique à travers le verre de lunettes à la vision supplémentaire.

3. Procédé selon la revendication 1 ou 2, suivant lequel, à la sous-étape /5-2/, la face antérieure du premier verre d'essai est définie de façon à rendre compte d'une position de l'image supplémentaire.

4. Procédé selon l'une quelconque des revendications précédentes, suivant lequel, à la sous-étape /5-1/, la face antérieure du premier verre fictif de cible possède la valeur de base de Tscherning qui est associée à la prescription supplémentaire.

5. Procédé selon l'une quelconque des revendications précédentes, suivant lequel la face postérieure du premier verre fictif d'essai possède initialement, avant l'optimisation de la sous-étape /5-2/, la valeur de courbure déterminée à l'étape /3/ en tout point de ladite face postérieure au moins dans la zone (Z) correspondant à la fenêtre de sortie (FS) de l'insert (2).

**6.** Procédé selon l'une quelconque des revendications précédentes, comprenant en outre une étape supplémentaire pour ajuster les valeurs de la face postérieure (FP) du verre de lunettes afin de compenser une première modification d'un écartement entre les faces antérieure (FA) et postérieure (FP) dudit verre de lunettes.

**7.** Procédé selon l'une quelconque des revendications précédentes, suivant lequel la face antérieure du troisième verre fictif d'essai possède initialement, avant l'optimisation de la sous-étape /6-2/, la valeur de courbure déterminée à l'étape /4/ en tout point de ladite face antérieure.

**8.** Procédé selon l'une quelconque des revendications précédentes, comprenant en outre une étape supplémentaire pour ajuster les valeurs de la face antérieure (FA) du verre de lunettes, afin de compenser une seconde modification d'un écartement entre les faces antérieure (FA) et postérieure (FP) dudit verre de lunettes.

**9.** Procédé selon la revendication 8, suivant lequel la seconde modification de l'écartement entre les faces antérieure (FA) et postérieure (FP) est déterminée de sorte qu'une marge prédéterminée sépare le bord périphérique (2b) de l'insert (2) par rapport à la face antérieure (FA) du verre de lunettes.

**10.** Procédé selon l'une quelconque des revendications précédentes, suivant lequel les valeurs de la face postérieure (FP) du verre de lunettes ne sont obtenues à partir de la face postérieure du premier verre fictif d'essai qu'à l'intérieur de la zone (Z) de ladite face postérieure correspondant à la fenêtre de sortie (FS) de l'insert (2), et suivant lequel l'étape /5/ comprend en outre les sous-étapes suivantes :

/5-3/ définir un second verre fictif de cible constitué du milieu réfringent et comprenant :

- une face antérieure fictive ayant une seconde valeur de base au point de prescription ophtalmique, ladite seconde valeur de base étant sélectionnée pour réduire des aberrations optiques de la vision ophtalmique par rapport à la prescription obtenue à l'étape /1/ ; et
- une face postérieure fictive adaptée pour produire au point de prescription ophtalmique, en combinaison avec la face antérieure fictive dudit second verre fictif de cible, une correction de la vision ophtalmique conforme à ladite prescription obtenue à l'étape /1/ ; et

/5-4/ à l'extérieur de la zone (Z) de la face postérieure correspondant à la fenêtre de sortie (FS) de l'insert (2), optimiser numériquement un second verre fictif d'essai comprenant :

- une face antérieure fictive ayant la valeur de courbure déterminée à l'étape /4/, au point de prescription ophtalmique ;
- la partie antérieure du milieu réfringent ;
- la partie intermédiaire du milieu réfringent ou l'insert ;
- la partie postérieure du milieu réfringent ; et
- une face postérieure complexe variable,

de sorte que le second verre fictif d'essai et le second verre fictif de cible aient des caractéristiques optiques sensiblement égales à l'extérieur de ladite zone,

les valeurs de la face postérieure (FP) du verre de lunettes à l'extérieur de la zone (Z) de ladite face postérieure correspondant à la fenêtre de sortie (FS) de l'insert (2), étant obtenues à partir de la face postérieure du second verre fictif d'essai à l'extérieur de ladite zone à l'issue de la sous-étape /5-4/.

**11.** Procédé selon la revendication 10, suivant lequel la face postérieure du second verre fictif d'essai possède initialement, avant l'optimisation de la sous-étape /5-4/ à l'extérieur de la zone (Z) correspondant à la fenêtre de sortie (FS) de l'insert, des valeurs uniformes de courbure déterminées de sorte que ledit second verre fictif d'essai produise au point de prescription ophtalmique, une correction pour la vision ophtalmique qui correspond à la prescription obtenue à l'étape /1/.

**12.** Procédé selon la revendication 10 ou 11, suivant lequel, à la sous-étape /5-3/, la face antérieure du second verre fictif de cible possède la valeur de base de Tscherning qui est associée à la prescription ophtalmique.

**13.** Procédé selon l'une quelconque des revendications 10 à 12, suivant lequel le troisième verre fictif de cible et le second verre fictif de cible sont identiques.

**14.** Procédé selon l'une quelconque des revendications 10 à 13, suivant lequel des contraintes de continuité de la face postérieure (FP) à une limite de la zone (Z) qui correspond à la fenêtre de sortie (FS) de l'insert (2), sont introduites dans l'optimisation qui est effectuée à la sous-étape /5-4/.

**Patentansprüche**

**1.** Verfahren zum Herstellen eines Brillenglases, das einem Träger des Glases mindestens zwei Sichten verleiht, darunter eine Brillensicht und eine zusätzliche Sicht, wobei das Glas Folgendes umfasst:

- eine Vorderseite (FA) und eine Hinterseite (FP), wobei die Vorderseite zum Auge (10) des Trägers für die Gebrauchsposition des Glases gerichtet ist;
- ein Licht brechendes Milieu (1), das zwischen der Vorderseite und der Hinterseite liegt; und
- einen Einsatz (2), der sich innerhalb des brechenden Milieus befindet und angepasst ist, um zwischen der Vorderseite und der Hinterseite des Glases durch ein Ausgangsfenster (FS) des Einsatzes in Richtung des Auges des Trägers ein zusätzliches Licht (VS) zu liefern, das ein zusätzliches Bild bildet, das von dem Träger in der Gebrauchsposition des Glases gesehen werden kann,

wobei die Brillensicht einem Bild entspricht, das von Licht (VO) gebildet wird, das nacheinander die Vorderseite (FA), einen vorderen Teil (1a) des Licht brechenden Milieus, das sich auf einer Vorderseite des Einsatzes befindet, den Einsatz (2) oder einen Zwischenteil (1b) des Licht brechenden Milieus, der sich außerhalb eines umfänglichen Rands (2b) des Einsatzes befindet, einen hinteren Teil (1p) des Licht brechenden Milieus, der sich auf einer Hinterseite des Einsatzes befindet, und die Hinterseite (FP) des Glases durchquert hat; und
die zusätzliche Sicht dem zusätzlichen Bild entspricht, das von dem zusätzlichen Licht (VS), das den Einsatz (2), den hinteren Teil (1p) des Licht brechenden Milieus und die Vorderseite (FP) des Glases durchquert hat, gebildet wird; Verfahren, das die folgenden aufeinanderfolgenden Schritte umfasst:

/1/ Erzielen einer Brillenverschreibung für den Träger des Glases;
/2/ Bestimmen einer zusätzlichen Verschreibung für die zusätzliche Sicht ausgehend von der Brillenverschreibung und einer Position des zusätzlichen Bilds;
/3/ Bestimmen mindestens eines Krümmungswerts für die Hinterseite (FP) des Glases, der der in Schritt /2/ bestimmten Verschreibung entspricht, an einer zusätzlichen Verschreibungsstelle;
/4/ Bestimmen mindestens eines Krümmungswerts für die Vorderseite (FA) des Glases an einer Brillenverschreibungsstelle in Abhängigkeit von der in Schritt /1/ erzielten Verschreibung und dem Krümmungswert der Hinterseite des Glases, der in Schritt /3/ bestimmt wurde;
/5/ Berechnen der Werte der Hinterseite (FP) des Glases außerhalb der zusätzlichen Verschreibungsstelle, mindestens im Inneren einer Zone (Z) der Hinterseite, die dem Ausgangsfenster (FS) des Einsatzes (2) entspricht, die angepasst sind, damit die Zone der Hinterseite eine Korrektur für die zusätzliche Sicht erzeugt, die der in Schritt /2/ bestimmten Verschreibung entspricht;
/6/ Berechnen der Werte der Vorderseite (FA) des Glases außerhalb der Brillenverschreibungsstelle, die angepasst sind, damit das Glas eine Korrektur für die Brillensicht erzeugt, die der in Schritt /1/ erzielten Verschreibung entspricht, wenn die Rückseite des Glases die in Schritt /5/ berechneten Werte besitzt; und
/7/ Herstellen des Brillenglases mit den Werten der Vorderseite (FA) und der Hinterseite (FP), die jeweils bei den Schritten /5/ und /6/ berechnet wurden,

**dadurch gekennzeichnet, dass** der Schritt /5/ die folgenden Unterschritte umfasst:

/5-1/ Definieren eines ersten fiktiven Zielglases, das aus dem Licht brechenden Milieu besteht und Folgendes umfasst:

- eine fiktive Vorderseite, die einen ersten Basiswert an der zusätzlichen Verschreibungsstelle hat, wobei der erste Basiswert ausgewählt ist, um optische Aberrationen der zusätzlichen Sicht im Vergleich zu der in Schritt /2/ bestimmten Verschreibung zu verringern; und
- eine fiktive Hinterseite, die angepasst ist, um an der zusätzlichen Verschreibungsstelle kombiniert mit der fiktiven Vorderseite des ersten fiktiven Zielglases eine Korrektur der zusätzlichen Sicht zu erzeugen, die mit der in Schritt /2/ bestimmten Verschreibung übereinstimmt; und

/5-2/ digitales Optimieren eines ersten fiktiven Probeglases, das Folgendes umfasst:

- eine fiktive Vorderseite, die in Abhängigkeit von dem Einsatz definiert ist;
- den Einsatz;
- den hinteren Teil des Licht brechenden Materials; und
- eine komplexe variable Hinterseite,

so dass das erste fiktive Probeglas und das erste fiktive Zielglas mindestens im Inneren des zusätzlichen Blickfelds im Wesentlichen gleiche optische Merkmale haben,

wobei die Werte der Rückseite (FP) des Brillenglases ausgehend von der Vorderseite des ersten fiktiven Probeglases nach dem Unterschritt /5-2/ erzielt werden,
und dass der Schritt /6/ die folgenden Unterschritte umfasst:

/6-1/ Definieren eines dritten fiktiven Zielglases, das aus dem Licht brechenden Milieu besteht und Folgendes umfasst:

- eine fiktive Vorderseite, die einen dritten Basiswert an der Brillenverschreibungsstelle hat, wobei der dritte Basiswert ausgewählt ist, um optische Aberrationen der Brillensicht im Vergleich zu der in Schritt /1/ erzielten Verschreibung zu verringern; und
- eine fiktive Hinterseite, die angepasst ist, um an der Brillenverschreibungsstelle kombiniert mit der Vorderseite des dritten fiktiven Zielglases eine Korrektur der Brillensicht zu erzeugen, die der in Schritt /1/ erzielten Verschreibung entspricht; und

/6-2/ digitales Optimieren eines dritten fiktiven Probeglases, das Folgendes umfasst:

- eine komplexe variable Vorderseite;
- den vorderen Teil des Licht brechenden Milieus;
- den Zwischenteil des Licht brechenden Milieus oder den Einsatz;
- den hinteren Teil des Licht brechenden Milieus; und
- eine Hinterseite, die den in Schritt /5/ berechneten Werten entspricht,

so dass das dritte fiktive Probeglas und das dritte fiktive Zielglas im Wesentlichen gleiche optische Merkmale haben,

wobei die Werte der Vorderseite (FA) des Brillenglases ausgehend von der Vorderseite des dritten fiktiven Probeglases nach dem Unterschritt /6-2/ erzielt werden.

2. Verfahren nach Anspruch 1, gemäß dem die zusätzliche Verschreibung bei Schritt /2/ derart bestimmt wird, dass eine Anpassungsbemühung des Trägers niedriger ist als 2,25 Dioptrien in Absolutwert, wenn der Träger von der Brillensicht durch das Brillenglas zu der zusätzlichen Sicht übergeht.

3. Verfahren nach Anspruch 1 oder 2, gemäß dem bei dem Unterschritt /5-2/ die Vorderseite des ersten Probeglases derart definiert wird, dass eine Position des zusätzlichen Bilds berücksichtigt wird.

4. Verfahren nach einem der vorhergehenden Ansprüche gemäß dem bei dem Unterschritt /5-1/ die Vorderseite des ersten fiktiven Zielglases den Tscherning-Basiswert besitzt, der mit der zusätzlichen Verschreibung assoziiert ist.

5. Verfahren nach einem der vorhergehenden Ansprüche, gemäß dem die Hinterseite des ersten fiktiven Probeglases ursprünglich, vor der Optimierung des Unterschrittes /5-2/, den in Schritt /3/ bestimmten Krümmungswert an jeder Stelle der Hinterseite mindestens in der Zone (Z), die dem Ausgangsfenster (FS) des Einsatzes (2) entspricht, besitzt.

6. Verfahren nach einem der vorhergehenden Ansprüche, das außerdem einen zusätzlichen Schritt umfasst, um die Werte der Hinterseite (FP) des Brillenglases einzustellen, um eine erste Änderung eines Abstands zwischen der Vorderseite (FA) und der Hinterseite (FP) des Brillenglases zu kompensieren.

7. Verfahren nach einem der vorhergehenden Ansprüche, gemäß dem die Vorderseite des dritten fiktiven Probeglases ursprünglich, vor der Optimierung des Unterschritts /6-2/, den bei Schritt /4/ bestimmten Krümmungswert an jeder Stelle der Vorderseite besitzt.

**8.** Verfahren nach einem der vorhergehenden Ansprüche, das außerdem einen zusätzlichen Schritt umfasst, um die Werte der Vorderseite (FA) des Brillenglases einzustellen, um eine zweite Änderung eines Abstands zwischen der Vorderseite (FA) und der Hinterseite (FP) des Brillenglases zu kompensieren.

**9.** Verfahren nach Anspruch 8, gemäß dem die zweite Änderung des Abstands zwischen der Vorderseite (FA) und der Hinterseite (FP) derart bestimmt wird, dass eine vorbestimmte Umrandung den umfänglichen Rand (2b) des Einsatzes (2) in Bezug auf die Vorderseite (FA) des Brillenglases trennt.

**10.** Verfahren nach einem der vorhergehenden Ansprüche, gemäß dem die Werte der Vorderseite (FP) des Brillenglases ausgehend von der Hinterseite des ersten fiktiven Probeglases erst im Inneren der Zone (Z) der Hinterseite erzielt werden, die dem Ausgangsfenster (FS) des Einsatzes (2) entspricht, und
gemäß dem Schritt /5/ außerdem die folgenden Unterschritte umfasst:

/5-3/Definieren eines zweiten fiktiven Zielglases, das aus dem Licht brechenden Milieu besteht und Folgendes umfasst:

- eine fiktive Vorderseite, die einen zweiten Basiswert an der Brillenverschreibungsstelle hat, wobei der zweite Basiswert ausgewählt ist, um optische Aberrationen der Brillensicht in Bezug auf die Verschreibung zu verringern, die bei dem Schritt /1/ erzielt wird; und
- eine fiktive Hinterseite, die angepasst ist, um an der Brillenverschreibungsstelle kombiniert mit der fiktiven Vorderseite des zweiten fiktiven Zielglases eine Korrektur der Brillensicht in Übereinstimmung mit der bei Schritt /1/ erzielten Verschreibung zu erzeugen; und

/5-4/außerhalb der Zone (Z) der Hinterseite, die dem Ausgangsfenster (FS) des Einsatzes (2) entspricht, digitales Optimieren eines zweiten fiktiven Probeglases, das Folgendes umfasst:

- eine fiktive Vorderseite, die den Krümmungswert hat, der bei Schritt /4/ an der Brillenverschreibungsstelle bestimmt wurde;
- den vorderen Teil des Licht brechenden Milieus;
- den Zwischenteil des Licht brechenden Teils oder den Einsatz;
- den hinteren Teil des Licht brechenden Milieus; und
- eine komplexe variable Hinterseite,

so dass das zweite fiktive Probeglas und das zweite fiktive Zielglas außerhalb der Zone im Wesentlichen gleiche optische Merkmale haben,

wobei die Werte der Hinterseite (FP) des Brillenglases außerhalb der Zone (Z) der Hinterseite, die dem Ausgangsfenster (FS) des Einsatzes (2) entspricht, ausgehend von der Hinterseite des zweiten fiktiven Probeglases außerhalb der Zone nach dem Unterschritt /5-4/ erzielt werden.

**11.** Verfahren nach Anspruch 10, gemäß dem die Hinterseite des zweiten fiktiven Probeglases ursprünglich, vor der Optimierung des Unterschritts /5-4/ außerhalb der Zone (Z), die dem Ausgangsfenster (FS) des Einsatzes entspricht, gleichförmige Krümmungswerte besitzt, die derart bestimmt sind, dass das zweite fiktive Probeglas an der Brillenverschreibungsstelle eine Korrektur für die Brillensicht erzeugt, die der bei Schritt /1/ erzielten Verschreibung entspricht.

**12.** Verfahren nach Anspruch 10 oder 11, gemäß dem bei dem Unterschritt /5-3/ die Hinterseite des zweiten fiktiven Zielglases den Tscherning-Basiswert, der mit der Brillenverschreibung assoziiert ist, besitzt.

**13.** Verfahren nach einem der Ansprüche 10 bis 12, gemäß dem das dritte fiktive Zielglas und das zweite fiktive Zielglas identisch sind.

**14.** Verfahren nach einem der Ansprüche 10 bis 13, gemäß dem die Kontinuitätsbelastungen der Hinterseite (FP) an einem Limit der Zone (Z), die dem Ausgangsfenster (FS) des Einsatzes (2) entspricht, in die Optimierung, die bei dem Unterschritt /5-4/ erfolgt, eingeführt werden.

**Claims**

1. Method for producing a spectacle lens providing a wearer of the lens with at least two types of vision, an ophthalmic vision and an additional vision, said lens comprising:

- a front face (FA) and a rear face (FP), said rear face facing the eye (10) of the wearer for the position of use of said lens;
- a refringent medium (1) situated between the front and rear faces; and
- an insert (2) situated within the refringent medium, and designed to deliver, between the front and rear faces of the lens, through an output window (FS) of said insert toward the eye of the wearer, an additional light (VS) forming an additional image visible to the wearer in the position of use of the lens,

the ophthalmic vision corresponding to an image formed by the light (VO) having passed in succession through the front face (FA), a front portion (1a) of the refringent medium situated on a front side of the insert, the insert (2) or an intermediate portion (1b) of the refringent medium situated outside a peripheral edge (2b) of said insert, a rear portion (1p) of the refringent medium situated on a rear side of the insert, and the rear face (FP) of the lens; and the additional vision corresponding to the additional image formed by said additional light (VS) passing through the insert (2), the rear portion (1p) of the refringent medium and the rear face (FP) of the lens; the method comprising the following successive steps:

/1/ obtaining an ophthalmic prescription for the wearer of the lens;
/2/ determining an additional prescription for said additional vision from the ophthalmic prescription and from a position of the additional image;
/3/ determining at least one curvature value for the rear face (FP) of the lens corresponding to the prescription determined in the step /2/, at an additional prescription point;
/4/ determining at least one curvature value for the front face (FA) of the lens at an ophthalmic prescription point, according to the prescription obtained in the step /1/ and the curvature value of the rear face of the lens determined in the step /3/;
/5/ calculating values of the rear face (FP) of the lens outside the additional prescription point, at least inside an area (Z) of said rear face corresponding to the output window (FS) of the insert (2), designed so that said rear face area produces a correction for the additional vision which corresponds to the prescription determined in the step /2/;
/6/ calculating values for the front face (FA) of the lens outside of the ophthalmic prescription point, designed so that said lens produces a correction for the ophthalmic vision which corresponds to the prescription obtained in the step /1/, when the rear face of the lens has the values calculated in the step /5/; and
/7/ producing the spectacle lens with the values for the front (FA) and rear (FP) faces calculated respectively in the steps /5/ and /6/,

**characterized in that** the step /5/ comprises the following substeps:

/5-1/ defining a first target hypothetical lens consisting of the refringent medium and comprising:

- a hypothetical front face having a first basic value at the additional prescription point, said first basic value being selected to reduce optical aberrations of the additional vision relative to the prescription determined in the step /2/; and
- the hypothetical rear face designed to produce, at the additional prescription point, in combination with the hypothetical front face of said first target hypothetical lens, a correction of the additional vision conforming to said prescription determined in the step /2/; and

5-2/ numerically optimizing a first test hypothetical lens comprising:

- a hypothetical front face defined according to the insert;
- the insert;
- the rear portion of the refringent material; and
- a variable complex rear face,

so that the first test hypothetical lens and the first target hypothetical lens have optical characteristics substantially equal to at least the interior of the additional field of vision,

the values for the rear face (FP) of the spectacle lens being obtained from the rear face of the first test hypothetical lens on completion of the substep /5-2/, and **in that** the step /6/ comprises the following substeps:

/6-1/ defining a third target hypothetical lens consisting of the refringent medium and comprising:

- a hypothetical front face having a third basic value at the ophthalmic prescription point, said third basic value being selected to reduce optical aberrations of the ophthalmic vision relative to the prescription obtained in the step /1/; and
- a hypothetical rear face designed to produce, at the ophthalmic prescription point, in combination with the hypothetical front face of said third target hypothetical lens, a correction of the ophthalmic vision conforming to said prescription obtained in the step /1/; and

/6-2/ numerically optimizing a third test hypothetical lens comprising:

- a variable complex front face;
- the front portion of the refringent medium;
- the intermediate portion of the refringent medium or the insert;
- the rear portion of the refringent medium; and
- a rear face corresponding to the values calculated in the step /5/,

so that the third test hypothetical lens and the third target hypothetical lens have substantially equal optical characteristics,

the values of the front face (FA) of the spectacle lens being obtained from the front face of the third test hypothetical lens on completion of the substep /6-2/.

2. Method according to Claim 1, according to which the additional prescription is determined in the step /2/ so that an accommodative effort on the part of the wearer is less than 2.25 dioptries as an absolute value, when said wearer switches from the ophthalmic vision through the spectacle lens to the additional vision.

3. Method according to Claim 1 or 2, according to which, in the substep /5-2/, the front face of the first test lens is defined so as to account for a position of the additional image.

4. Method according to any one of the preceding claims, according to which, in the substep /5-1/, the front face of the first target hypothetical lens has the Tscherning base value which is associated with the additional prescription.

5. Method according to any one of the preceding claims, according to which the rear face of the first test hypothetical lens initially has, before the optimization of the substep /5-2/, the curvature value determined in the step /3/ at any point of said rear face at least within the area (Z) corresponding to the output window (FS) of the insert (2).

6. Method according to any one of the preceding claims, also comprising an additional step for adjusting the values of the rear face (FP) of the spectacle lens in order to compensate for a first modification of a distance between the front (FA) and rear (FP) faces of said spectacle lens.

7. Method according to any one of the preceding claims, according to which the front face of the third test hypothetical lens initially has, before the optimization of the substep /6-2/, the curvature value determined in the step /4/ at any point of said front face.

8. Method according to any one of the preceding claims, also comprising an additional step for adjusting the values of the front face (FA) of the spectacle lens, in order to compensate for a second modification of a distance between the front (FA) and rear (FP) faces of said spectacle lens.

9. Method according to Claim 8, according to which the second modification of the distance between the front (FA) and rear (FP) faces is determined so that a predetermined margin separates the peripheral edge (2b) of the insert (2) relative to the front face (FA) of the spectacle lens.

10. Method according to any one of the preceding claims, according to which the values of the rear face (FP) of the spectacle lens are obtained from the rear face of the first test hypothetical lens only within the area (Z) of said rear face corresponding to the output window (FS) of the insert (2), and
according to which the step /5/ also comprises the following substeps:

/5-3/ defining a second target hypothetical lens consisting of the refringent medium and comprising:

- a hypothetical front face having a second basic value at the ophthalmic prescription point, said second basic value being selected to reduce optical aberrations of the ophthalmic vision relative to the prescription obtained in the step /1/; and
- a hypothetical rear face designed to produce, at the ophthalmic prescription point, in combination with the hypothetical front face of said second target hypothetical lens, a correction of the ophthalmic vision conforming to said prescription obtained in the step /1/; and

/5-4/ outside the area (Z) of the rear face corresponding to the output window (FS) of the insert (2), numerically optimizing a second test hypothetical lens comprising:

- a hypothetical front face having the curvature value determined in the step /4/, at the ophthalmic prescription point;
- the front portion of the refringent medium;
- the intermediate portion of the refringent medium or the insert;
- the rear portion of the refringent medium; and
- a variable complex rear face,

so that the second test hypothetical lens and the second target hypothetical lens have substantially equal optical characteristics outside said area,

the values of the rear face (FP) of the spectacle lens outside the area (Z) of said rear face corresponding to the output window (FS) of the insert (2), being obtained from the rear face of the second test hypothetical lens outside said area on completion of the substep /5-4/.

11. Method according to Claim 10, according to which the rear face of the second test hypothetical lens initially has, before the optimization of the substep /5-4/ outside the area (Z) corresponding to the output window (FS) of the insert, uniform curvature values determined so that said second test hypothetical lens produces, at the ophthalmic prescription point, a correction for the ophthalmic vision which corresponds to the prescription obtained in the step /1/.

12. Method according to Claim 10 or 11, according to which, in the substep /5-3/, the front face of the second target hypothetical lens has the Tscherning base value which is associated with the ophthalmic prescription.

13. Method according to any one of Claims 10 to 12, according to which the third target hypothetical lens and the second target hypothetical lens are identical.

14. Method according to any one of Claims 10 to 13, according to which constraints of continuity of the rear face (FP) to a limit of the area (Z) which corresponds to the output window (FS) of the insert (2), are introduced into the optimization which is performed in the substep /5-4/.

**FIG. 1a**

**FIG. 1b**

## PUISSANCE OPTIQUE MOYENNE
## PREMIER VERRE - VISION OPHTALMIQUE

**FIG. 2a**

## PUISSANCE OPTIQUE MOYENNE
## TROISIEME VERRE - VISION OPHTALMIQUE

**FIG. 6a**

EP 2 350 735 B1

ASTIGMATISME
PREMIER VERRE - VISION OPHTALMIQUE

BETA EN DEGRES

FIG. 2b

ASTIGMATISME
TROISIEME VERRE - VISION OPHTALMIQUE

BETA EN DEGRES

FIG. 6b

PUISSANCE OPTIQUE MOYENNE
TROISIEME VERRE - VISION SUPPLEMENTAIRE

FIG. 6c

PUISSANCE OPTIQUE MOYENNE
PREMIER VERRE - VISION SUPPLEMENTAIRE

FIG. 2c

ASTIGMATISME
PREMIER VERRE - VISION SUPPLEMENTAIRE

FIG. 2d

ASTIGMATISME
TROISIEME VERRE - VISION SUPPLEMENTAIRE

FIG. 6d

EP 2 350 735 B1

PUISSANCE OPTIQUE MOYENNE
SECOND VERRE - VISION OPHTALMIQUE

FIG. 3a

PUISSANCE OPTIQUE MOYENNE
QUATRIEME VERRE - VISION OPHTALMIQUE

FIG. 7a

EP 2 350 735 B1

ASTIGMATISME
QUATRIEME VERRE - VISION OPHTALMIQUE

FIG. 7b

ASTIGMATISME
SECOND VERRE - VISION OPHTALMIQUE

FIG. 3b

PUISSANCE OPTIQUE MOYENNE
QUATRIEME VERRE - VISION SUPPLEMENTAIRE

BETA EN DEGRES

ALPHA EN DEGRES

FIG. 7c

PUISSANCE OPTIQUE MOYENNE
SECOND VERRE - VISION SUPPLEMENTAIRE

BETA EN DEGRES

ALPHA EN DEGRES

FIG. 3c

ASTIGMATISME
SECOND VERRE - VISION SUPPLEMENTAIRE

ASTIGMATISME
QUATRIEME VERRE - VISION SUPPLEMENTAIRE

FIG. 3d

FIG. 7d

EP 2 350 735 B1

| VERRES FICTIFS | FACE ANTÉRIEURE | FACE POSTÉRIEURE |
|---|---|---|
| PREMIER VERRE DE CIBLE | BASE DE TSCHERNING POUR LA VISION SUPPLEMENTAIRE | COURBURES SELON LA PRESCRIPTION SUPPLEMENTAIRE |
| PREMIER VERRE D'ESSAI | SELON L'INSERT | VARIABLE |

1$^{ere}$ OPTIMISATION

FACE POSTERIEURE OPTIMISEE

| TROISIEME VERRE DE CIBLE | BASE DE TSCHERNING POUR LA VISION OPHTALMIQUE | COURBURE SELON LA PRESCRIPTION OPHTALMIQUE |
|---|---|---|
| TROISIEME VERRE D'ESSAI | VARIABLE | |

OPTIMISATION

| FACE ANTERIEURE OPTIMISEE | FACE POSTERIEURE OPTIMISEE |
|---|---|

USINAGE DOUBLE FACE

VERRE FINAL

**FIG. 4**

EP 2 350 735 B1

|  | FACE ANTERIEURE | FACE POSTERIEURE |
|---|---|---|
| SECOND VERRE FICTIF DE CIBLE | BASE DE TSCHERNING POUR LA VISION OPHTALMIQUE | COURBURES SELON LA PRESCRIPTION OPHTALMIQUE |
| SECOND VERRE FICTIF D'ESSAI | COURBURE SELON EFFORT ACCOMMODATIF | VARIABLE |

OPTIMISATION

FACE POSTERIEURE OPTIMISEE A L'EXTERIEUR DE LA ZONE Z

FIG. 5

EP 2 350 735 B1

**EP 2 350 735 B1**

## RÉFÉRENCES CITÉES DANS LA DESCRIPTION

**Documents brevets cités dans la description**

- WO 2008003903 A